# EUROPÄISCHE PATENTSCHRIFT

(11) **EP 3 973 010 B1**
(45) Veröffentlichungstag und Bekanntmachung des Hinweises auf die Patenterteilung: **01.04.2026**
(21) Anmeldenummer: 20726143.9
(22) Anmeldetag: 20.05.2020
(51) Int. Cl.: C08G 59/22, C08F 4/40, C08G 59/24, C08G 59/68, C08K 3/36, C08K 5/541, C08K 9/06, C08L 43/04, C08L 101/10, C09J 143/04, C09J 201/10

(54) **VERFAHREN ZUR HERSTELLUNG EINES DRUCKEMPFINDLICHEN SELBSTKLEBENDEN HAFTKLEBSTOFFES AUF DER BASIS EINES ALKOXYLIERTEN, INSBESONDERE ETHOXYLIERTEN; SILANHALTIGEN POLYMERS, HAFTKLEBSTOFF, HERGESTELLT NACH DIESEM VERFAHREN, UND DESSEN VERWENDUNG**
METHOD FOR PRODUCTION OF PRESSURE-SENSITIVE SELF-ADHESIVE, ADHESIVE BASED ON AN ETHOXYLATED SILANE CONTAINING POLYMER, ADHESIVE PRODUCED BY THE METHOD, AND USE THEREOF
PROCÉDÉ DE FABRICATION D'UN ADHÉSIF AUTOADHÉSIF SENSIBLE À LA PRESSION À BASE D'UN POLYMÈRE CONTENANT DU SILANE ÉTHOXYLÉ, ADHÉSIF FABRIQUÉ SELON LEDIT PROCÉDÉ ET SON UTILISATION

(30) Priorität: 21.05.2019 EP 19175648
(43) Veröffentlichungstag der Anmeldung: 30.03.2022
(73) Patentinhaber: Coroplast Fritz Müller GmbH & Co. KG, 42279 Wuppertal (DE)
(72) Erfinder: LUENNE, Mario, 40699 Erkrath (DE)
(74) Vertreter: Dr. Solf & Zapf Patent- und Rechtsanwalts PartG mbB
(86) Internationale Anmeldenummer: PCT/EP2020/064052
(87) Internationale Veröffentlichungsnummer: WO 2020/234342

(56) Entgegenhaltungen:
- EP-A1- 2 682 444
- EP-A1- 3 255 113
- EP-A2- 0 295 330
- WO-A1-2016/174469
- WO-A1-2017/162690

## Beschreibung

Die vorliegende Erfindung betrifft ein Verfahren zur Herstellung eines druckempfindlichen selbstklebenden Haftklebstoffes (PSA - Pressure Sensitive Adhesive) auf der Basis eines alkoxylierten, insbesondere ethoxylierten, silanhaltigen Polymers sowie einen Haftklebstoff, der nach diesem Verfahren hergestellt ist, und dessen Verwendung.

Heute gebräuchliche Haftklebstoffe bestehen üblicherweise aus Kautschuk- oder Acrylatsystemen, die aus verschiedenen Matrices appliziert werden können: als wässerige Dispersionen, aus Lösungen, in organischen Lösungsmitteln oder als 100-%-System. Diese Haftklebstoffe werden überwiegend aus Natur- oder Synthesekautschuk oder aus Polyacrylaten hergestellt. Kautschukklebstoffe bestehen aus Polyisopren bzw. Blockcopolymeren aus Styrol und Isopren bzw. Butadien und benötigen zur Erlangung haftklebriger Eigenschaften eine Abmischung mit Harzen. Zumeist werden noch zusätzlich Mineralöle als Weichmacher und/oder anorganische Füllstoffe oder Pigmente wie Kreide, Zinkoxid oder Titandioxid zugegeben. Acrylathaftklebstoffe bestehen in der Regel aus einem Copolymerisat verschiedener Ester der Acrylsäure. Üblich sind insbesondere 2-Ethylhexylacrylat und n-Butylacrylat. Alle diese bekannten Klebstoffe haben jeweils bestimmte Vorund Nachteile, so dass es keinen universellen Haftklebstoff gibt.

Lösungsmittelbasierte Klebstoffe (englisch: Solvent Based Pressure Sensitive Adhesives - SBPSA), insbesondere Acrylate, weisen zwar hinsichtlich ihrer Klebeeigenschaften viele Vorteile auf, sind aber z. B. vergleichsweise weniger umweltfreundlich, da das Lösungsmittel nachbehandelt bzw. rezykliert werden muss.

Eine Alternative zu den vorstehend genannten PSA sind silanmodifizierte Polymere (englisch: Silane Modified Polymers - SMP). Diese - auch organofunktionelle Silane genannten Stoffe - sind hybride Verbindungen, die in einem Molekül die Funktionalität einer reaktiven organischen Gruppe mit der anorganischen Funktionalität eines Alkylsilikats verbinden. Sie werden bisher vor allem im Bereich der Kleb- und Dichtstoffe eingesetzt. Unter Feuchtigkeitseinwirkung bilden sie ein elastisches Netzwerk aus, welches auch als Basis für Haftklebstoffe zur Verwendung bei Etiketten und Klebebändern benutzt werden kann. So können sie, insbesondere bei ihrer Verarbeitung, sowohl technisch als auch ökologisch alle Anforderungen an moderne Kleb- und Dichtstoffe erfüllen. Dazu ist es - im Unterschied zu den anderen bekannten abbindenden Klebstoffsystemen - allerdings notwendig, als wichtige Haftklebstoffeigenschaft eine permanente Klebrigkeit zu gewährleisten. Vorteile gegenüber den Kautschuk-Hotmelt-PSA liegen dabei im Bereich einer gesteigerten Temperatur- und Lösungsmittelbeständigkeit. Lösungsmittelbasierte Acrylate sind im Vergleich mit den SMP-PSA weniger umweltfreundlich, da - wie erwähnt - das Lösungsmittel nachbehandelt werden muss.

Grundsätzlich können unter Einwirkung von Feuchtigkeit und/oder Wärme in silanmodifizierten Prepolymeren befindliche Alkoxy-Silanol-Gruppen hydrolisiert werden und anschließend unter Kondensation ein Netzwerk bilden. Erwünschte klebrige Eigenschaften erhält man dann durch den Zusatz von geeigneten Harzsystemen, deren Einsatz aber oftmals durch eine reduzierte Kompatibilität mit dem Polymer eingeschränkt ist. Formulierungen auf Basis dieser Polymere werden zumeist unter Zuhilfenahme von organischen Zinn- oder Titanverbindungen als Katalysatoren bzw. Starter oder Initiatoren vernetzt, wobei diese Stoffe - im Gegensatz zum Verständnis eines Katalysators im engeren Sinne - gegebenenfalls auch in das Reaktionsprodukt eingehen können. Beispiele für solche Verbindungen sind Dioctylzinndilaurat (im Handel z. B. bekannt als TIB-KAT^{®} 216 der Firma TIB Chemicals AG) oder 2-Ethylhexyltitanat (auch bekannt als Tyzor^{®} TOT der Firma Dorf Ketal Speciality Catalysts LLC). Teilweise werden in der Literatur auch Aluminiumverbindungen als Katalysatoren beschrieben.

In den 1980-er Jahren wurde, insbesondere von der Firma Kaneka, die Technologie der Herstellung und Verarbeitung der sogenannten MS-Polymere englisch Modified by Silane - MS) beschrieben (z. B. EP 0 295 330 A2 und EP 0 106 330 B1). So erwähnt die EP 0 295 330 A2 einen Acrylhaftklebstoff, umfassend:(A) 100 Gewichtsteile Acrylpolymer, umfassend Einheiten, die von einem Alkylacrylat abgeleitet sind, dessen Alkylgruppe 2 bis 14 Kohlenstoffatome aufweist, und (B) 1 bis 30 Gewichtsteile Polyether mit mindestens einer siliciumhaltigen vernetzbaren Gruppe in einem Molekül, wobei die siliciumhaltige vernetzbare Gruppe unter Bildung einer Siloxanbindung zu einem Elastomer vernetzbar ist. In den Beispiele werden auch Zusammensetzungen erwähnt, die außerdem ein klebrig machendes Harz ('tackifier resin') enthalten. Im Zuge der Weiterentwicklung dieser Technologie sind bis in die letzten Jahre hinein weitere Patentanmeldungen veröffentlicht worden, die sich auf verschiedene Variationen der Zusammensetzung in der Polymerkette beziehen. So wurde zum Beispiel Polyurethan (PUR) in die Polymerkette eingeführt bzw. es wurden Polyether-Monomereinheiten gegen Polyurethaneinheiten ausgetauscht. Durch Abmischung mit kompatiblen klebrig machenden Harzen (Tackifiern) können sich dadurch Haftklebstoffe ergeben, die die Klebeeigenschaften von SBPSA erreichen sollen. Dabei bestehen gleichzeitig Vorteile gegenüber den Kautschuk-Hotmelts im Bereich der gesteigerten Temperatur- und Lösungsmittelbeständigkeit.

Aus der DE 20 2014 104 045 U1 ist ein Haftklebstoff auf der Basis eines silanmodifizierten Polymers und ein entsprechender Haftklebeartikel, insbesondere ein Klebeband, bekannt. Dieses technische Klebeband eignet sich für insbesondere Anwendungen im Baubereich und weist einen bandförmigen Träger sowie eine auf zumindest einer Seite des Trägers aufgebrachte druckempfindliche sowie vernetzbare Klebebeschichtung auf, welche ein spezifisches Flächengewicht von mehr als 100 g/m² hat. Die Klebebeschichtung setzt sich zunächst aus folgenden Bestandteilen zusammen: a) 20 Gew.-% bis 85 Gew.-% eines Polyurethans oder Polyethers; b) 15 Gew.-% bis 85 Gew.-% eines mit der Komponente a) verträglichen Klebeharzes und c) 0,01 Gew.-% bis 3 Gew.-% eines Vernetzungsmittels. Die Klebebeschichtung soll dabei insgesamt vorzugsweise wärmevernetzbar ausgebildet sein. Unter diesem Aspekt hat es sich als günstig erwiesen, wenn das eingesetzte Polyurethan bzw. Polyether auch Silan enthält. In der konkreten Zusammensetzung weist dann eine solche Komponente vom Typ eines hydrolysierbaren Alkoxysilans im Regelfall zwei endständige silanhaltige Gruppen auf.

Die US 2015/0030848 A1 beschreibt ein Verfahren zur Herstellung eines atmungsaktiven Selbstklebeartikels. Es wird ganz allgemein beansprucht, diesen Selbstklebeartikel unter Verwendung einer Klebstoffzusammensetzung herzustellen, die a) mindestens ein silylhaltiges Polymer, b) mindestens ein kompatibles klebrig machendes Harz und c) mindestens einen Katalysator enthält. Die Gewichtsprozente der einzelnen Komponenten teilen sich dabei bevorzugt wie folgt auf: a) 20 Gew.-% bis 85 Gew.-%, b) 15 Gew.-% bis 80 Gew.-%, c) 0,01 Gew.-% bis 3 Gew.-%. Das silylhaltige Polymer besteht aus Polyurethan oder Polyether oder ist ein Kopolymerisat aus Polyurethan- und Polyether-Blöcken. Als geeignete klebrig machende Harze werden phenolmodifizierte Terpenharze, Kohlenwasserstoffharze, Rosinesterharze, Acrylharze und deren Mischungen genannt.

Es ist jedoch zu konstatieren, dass Haftklebstoffe der eingangs beschriebenen Art, die aus silanvernetzenden, insbesondere alkoxysilanterminierten, Präpolymeren hergestellt sind, in vielen Fällen hinter den klebetechnischen Anforderungen zurückbleiben, welche von marktüblichen Haftklebstoffen, die z. B. auf der Basis von aus einer Lösungsmittelmatrix abgeschiedenen Polyacrylaten hergestellt sind, ohne Weiteres erfüllt werden.

Ein weiteres Problem besteht darin, dass darüber hinaus bei der Herstellung der vorstehend beschriebenen Haftklebstoffe, die in der Regel aus methoxysilierten Präpolymeren hergestellt werden, während des Vernetzens toxisches Methanol abgespalten wird. Das Methanol tritt in die Abluft des Prozesses ein und muss entweder behandelt oder unter den kritischen MAK-Wert von 270 mg/m³ Luft über 8 Stunden (MAK = Richtwert für die maximale Arbeitsplatzkonzentration) bzw. unter den in Deutschland erlaubten VOC-Wert von 20 mg/m³ für Methanol (VOC - Volatile Organic Compounds, flüchtige organische Verbindungen) gebracht werden. Bei einer durchschnittlichen Freisetzung von 0,6 Ma.-% Methanol und einem Auftragsgewicht von 100 g Klebstoff pro m², der typisch für Klebebänder ist, entstehen im Beschichtungsprozess 300 mg/m² Methanol, wenn von einer Rezeptur mit 50 Ma.-% Harzanteil ausgegangen wird. Daher ist eine Filtration oder entsprechende Verdünnung der Abluft unter Einsatz einer dafür notwendigen Sensorik unabdingbar. Schließlich liegt die untere Explosionsgrenze von Methanol in Luft bei 6 Vol.-%, weshalb auch aus Sicherheitsgründen eine Konzentrationskontrolle notwendig und eine Methanolanreicherung in der Luft zu vermeiden sind.

Um ein Verfahren zur Herstellung eines Haftklebstoffs auf der Basis eines silanmodifizierten Polymers zu schaffen, durch das eine Methanolanreicherung in der Luft minimiert wird, wobei der Haftklebstoff sowie auch ein Haftklebeartikel der eingangs genannten Art hohe klebetechnische Anforderungen erfüllt, und wobei insbesondere die Klebeeigenschaften von SBPSA erreicht werden sollen, sieht die DE 10 2016 105 339 A1 bzw. die WO 2017/162690 A1 vor, dass der Haftklebstoff - unter Einsatz eines Katalysators - aus einem Gemisch von kettenförmigen, silanmodifizierten, alkoxysilierten Präpolymeren hergestellt wird, wobei das Gemisch mindestens ein erstes, silanmodifiziertes, an der Kette seitenständig ethoxysiliertes Präpolymer und mindestens ein zweites silanmodifiziertes, an der Kette endständig und/oder seitenständig ethoxysiliertes und/oder methoxysiliertes Präpolymer enthält, wobei das erste Präpolymer und das zweite Präpolymer unter Abspaltung von Alkohol miteinander vernetzt werden. Insofern bei diesem Verfahren ein ethoxysiliertes Präpolymer zum Einsatz kommt, handelt es sich um ein Verfahren gemäß der eingangs beschriebenen Art. Der abgespaltene Alkohol ist dann Ethanol. Es wird auch erwähnt, dass es zur Steuerung der Vernetzungsgeschwindigkeit erforderlich ist, Katalysatoren in Mengen von 0,05 Ma.-% - 0,3 Ma.-% - bezogen auf die Gesamtrezeptur einzusetzen. Metallkatalysatoren enthalten dabei insbesondere Zinn-, Titan- oder Zirkoniumverbindungen, wie z. B. der titanhaltige Katalysator Tyzor TPT der Firma DuPont oder Tyzor NPZ der gleichen Firma, welcher Tetraalkylzirkonat enthält, oder Tyzor AA75, welcher Titanacetylacetonat enthält (ebenfalls von DuPont). Auch organische Säuren oder Ester wie Butylphosphat oder sogenannte Koch-Säuren (tertiäre gesättigte Monocarbonsäuren) sowie heterozyklische Komponenten wie Lupragen N 700 (1,8-Diazabicyclo-5,4,0-undecen-7) kommen in Betracht.

Die EP 2 682 444 A1 betrifft die Verwendung einer druckempfindlichen Klebemasse zur Verklebung in feuchter Umgebung. Es wird eine Klebstoffzusammensetzung erwähnt, umfassend a) mindestens ein silylhaltiges Polymer, wie einen silylhaltigen Polyether, ein silylhaltiges Polyurethan, insbesondere ein silylhaltiges Polyurethan mit Polyurethan-Polyether- und Polyurethan-Polyester-Blöcken, und Mischungen davon, b) mindestens ein kompatibles klebrigmachendes Harz, wie ein phenolmodifiziertes Terpenharz, Kohlenwasserstoffharz, Kolophoniumesterharz, Acrylharz und Gemischen davon, und umfassend c) mindestens einen Katalysator. Als ein derartiger Katalysator wird - wie auch in der vorstehend genannten DE 10 2016 105 339 A1 bzw. in der WO 2017/162690 A1 - Tyzor AA75 (Titanacetylacetonat) genannt. Auch Aluminiumchelat (K-KAT^{®} 5218 der Firma King Industries) sowie Amine werden als Katalysatoren für eine Silanol-Kondensation erwähnt.

Eine technische-ökonomische Herausforderung stellt es dabei dar, dass bei der Herstellung und *In-situ*-Verarbeitung der genannten Polymere auf einer Beschichtungsanlage zur Herstellung von Klebebänder eine hohe Vernetzungsgeschwindigkeit benötigt wird, da für eine hinreichende Wirtschaftlichkeit des Beschichtungsprozesses hohe Bahngeschwindigkeiten gefahren werden sollten und somit der Klebstoff nach sehr kurzer Zeit in einer zur Aktivierung der Vernetzung eingesetzten Vorrichtung, wie einen Ofen oder einer UV-Bestrahlungsvorrichtung, bereits einen hinreichend hohen Vernetzungsgrad aufweisen muss. Dies gilt insbesondere auch bei höheren Schichtdicken.

Methoxysilierte Präpolymer-Systeme bieten dabei eine verhältnismäßig schnelle Vernetzungsmöglichkeit mit den vorstehend genannten Zinn- oder Titankatalysatoren. Diese kann sich jedoch während der Applikation als problematisch erweisen, da die Vernetzung bei zu hoher Reaktionsgeschwindigkeit bereits während der Beschichtung, insbesondere sogar u. U. schon im Beschichtungskopf eintreten kann. Dies ist unbedingt zu vermeiden, da gegenteiligenfalls nachteiligerweise klumpenförmige qualitätsmindernde Massebereiche in der Klebeschicht auftreten oder am Beschichtunskopf produktionshindernde Verkrustungen entstehen könnten. Mit zunehmendem Anteil von ethoxysilierten Präpolymeren in den Reaktionssystemen hat es sich jedoch gezeigt, dass die Katalyse eine Effizienzeinbuße erleidet und nicht mehr ausreicht, um die Vernetzung bis zum Ende einer vorgesehenen Behandlungsphase im Ofen vollständig ablaufen zu lassen. Auch ist hierbei zur Erzielung einer Vollständigkeit der Vernetzung zusätzlich ein erhöhtes Maß an Feuchtigkeit im Ofen nötig.

Des Weiteren ist produktionstechnisch eine Implementierung eines Zwei- oder Mehr-Komponenten-Systems, wie es das DE 10 2016 105 339 A1 bekannte Gemisch von kettenförmigen, silanmodifizierten, alkoxysilierten Präpolymeren ist, sowie eine Feuchtigkeitseinspeisung in aktuelle Öfen nur unter großem Aufwand möglich. Deswegen ist eine Möglichkeit für eine schnelle Vernetzung mit einem Ein-Komponenten-System sowie auch ohne das zusätzliche Einbringen von Feuchtigkeit während des Vernetzungsprozesses gesucht und gewünscht. Andererseits ist auch für Zwei- oder Mehrkomponenten-Systeme zu konstatieren, dass aus den vorstehend genannten Gründen (Verkrustung im Beschichtungskopf, Inhomogenitäten in der Schicht) eine zu hohe Vernetzungsgeschwindikeit unerwünscht ist.

Der Erfindung liegt das Problem zugrunde, ein Verfahren der eingangs genannten Art zur Herstellung eines druckempfindlichen selbstklebenden Haftklebstoffes auf der Basis eines alkoxylierten, insbesondere ethoxylierten, silanhaltigen Polymers, dem mindestens ein mit dem alkoxylierten silanhaltigen Polymer kompatibles klebrig machendes Harz und mindestens ein Katalysator K zugemischt wird, zu schaffen, das den vorstehend genannten Problemen abhilft, indem es insbesondere eine steuer- bzw. einstellbare Reaktionsgeschwindigkeit der Vernetzung gewährleistet.

Das der Erfindung zugrunde liegende Problem wird dadurch gelöst, dass das alkoxylierte silanhaltige Polymer unter Einsatz eines Katalysators vernetzt wird, der ein Lewis-Säure-Base-Addukt umfasst, wobei die Lewis-Säure ein zumindest im Temperaturbereich unter 60 °C in wasserfreiem Medium reaktionsgehemmtes Kation und die Lewis-Base ein Anion einer sehr starken Säure ist.

Die genannte Reaktionshemmung kann sich dabei bis in einen Bereich von bis zu 80 °C und sogar bis zu 110 °C erstrecken und kann vorzugsweise durch eine sterische Hinderung des Kations bewirkt werden.

Ein auf diese Weise hergestellter erfindungsgemäßer Haftklebstoff kann insbesondere zur Herstellung eines Haftklebeartikels, wie eines Klebebandes oder eines Etiketts, eingesetzt werden, wobei der Haftklebeartikel einen Träger umfasst, auf den der Haftklebstoff zumindest einseitig in Form einer Klebstoffmasse aufgetragen ist.

In bevorzugter Weise kann erfindungsgemäß vorgesehen sein, dass die Lewis-Säure ein organylgruppenhaltiges Halogen-Onium-Kation ist. Die Lewis-Base kann in bevorzugter Weise das Anion einer Supersäure sein.

Das Lewis-Säure-Base-Konzept ist bekanntermaßen eine Definition der Begriffe Säure und Base, die über die frühere Brønstedt-Klassifikation hinausgeht, wonach Säuren Protonendonatoren und Basen Protonenakzeptoren sind. Diese umfassendere Definition wurde 1923 von Gilbert Newton Lewis eingeführt. Demgemäß ist eine Lewis-Säure ein elektrophiler Elektronenpaarakzeptor, kann also Elektronenpaare anlagern, während eine Lewis-Base dementsprechend ein nukleophiler Elektronenpaardonator ist, der Elektronenpaare zur Verfügung stellen kann.

Unter einer Onium-Verbindung (auch Onium-Ion) wird im engeren Sinn allgemein ein Kation verstanden, welches formal durch Protonierung des Hydrids eines Pnictogens (Gruppe 15 im Periodensystem - Stickstoff-Gruppe), eines Chalkogens (Gruppe 16) oder eines Halogens (Gruppe 17) entstanden ist. Es gibt jedoch auch Onium-Ionen der Borgruppe (Gruppe 13), der Kohlenstoffgruppe (Gruppe 14), des Wasserstoffs und der Edelgase (Gruppe 18). Das am längsten bekannte Onium-Ion, aus welchem auch der Namen der Onium-Verbindungsgruppe abgeleitet wurde, ist Ammonium, NH₄⁺, welches bekanntermaßen durch Protonierung aus Ammoniak NH₃ entsteht. Der Begriff Onium wird hier anmeldungsgemäß jedoch im weiteren Sinne benutzt, wonach damit auch Kationen bezeichnet werden, die durch Substitution eines oder mehrerer Wasserstoffatome durch eine andere Gruppe resultieren, wobei auch eine Di- oder Trivalenz vorliegen kann. Ein Onium-Kation ist in der Lage, als Elektronenpaarakzeptor zu agieren, und ist daher eine Lewis-Säure. Ein organylgruppenhaltiges Halogen-Onium-Ion ist - im Gegensatz zu einem negativ geladenen Halogenid-Ion ohne koordinativ angelagerte Gruppen - ein positiv geladenes Teilchen. Bei dem organylgruppenhaltigen Halogen-Onium-Ion kann es sich dabei bevorzugt um ein Diaryl mit divalenter Anbindung, also der chemischen Bindung an zwei, insbesondere gleichartig ausgebildete, aromatische organische Reste an das protonierte Halogen handeln. Auch drei oder mehr Arylgruppen können in dem organylgruppenhaltigen Halogen-Onium-Ion enthalten sein.

In der WO 2016/174469 A1 wird erwähnt, dass ein Initiator und/oder eine Katalysatorkomponente zur Herstellung einer härtbaren Zwei-KomponentenKlebstoff-Zusammensetzung ein lodoniumsalz sein kann, ausgewählt aus (4-n-Octyloxyphenyl)phenyliodoniumhexafluorantimonat (OPPI SbF6), (4-n-Decyloxyphenyl)phenyliodoniumhexafluorphosphat (DOPI PF6), Di(t-Butylphenyl) iodoniumhexafluorarsenat (DTBPI AsF6) und (4-Methylphenyl)-(4-isopropylphenyl) iodoniumtetrakispentafluorphenylborat (Rhodorsil 2074). Die Zusammensetzung umfasst: (A) eine Klebstoffkomponente, umfassend: (i) einen aliphatischen Glycidylether; (ii) ein cycloaliphatisches Epoxy und/oder einen aromatischen Glycidylether; und (iii) ein Silanreduktionsmittel; sowie (B) eine Katalysatorkomponente, umfassend: (iv) einen Edelmetallkatalysator der Gruppe 9 oder der Gruppe 10, wobei die Klebstoffkomponente (A) und/ oder die Katalysatorkomponente (B) ferner einen Initiator umfassen. Was das genannte Silanreduktionsmittel ("silane reducing agent") betrifft, so ist dieses chemisch gesehen eine Si-H-Verbindung, also etwas Anderes als ein silanmodifiziertes Polymer. Si-OR-Gruppen - mit R als einer Kohlenstoffatome enthaltenden Komponente - sind dort nicht vorhanden. Auch sind die in der WO 2016/174469 A1 beanspruchten und im Rahmen der Beispiele beschriebenen epoxidische Komponenten ebenfalls nicht vergleichbar mit silanmodifizierten Polymeren, so dass es nicht naheliegt, die an sich bekannten und für Epoxidharze selektiven Initiatoren/Katalsatoren erfindungsgemäß einzusetzen.

Als sehr starke Säuren werden in der Chemie Säuren bezeichnet, die pKₛ-Werte von weniger als -0,35 aufweisen. Der pKₛ-Wert, welcher - wie der pH-Wert - eine dimensionslose Zahl ist und aus Tabellenwerken entnommen werden kann, gibt dabei an, inwieweit eine Säure bei der Gleichgewichtsreaktion mit Wasser protolysiert vorliegt. Er ergibt sich als der dekadische Logarithmus der Wasserstoffionen-Aktivität. Je kleiner dieser Wert ist, desto stärker ist die Säure. Beispielsweise liegt der pKₛ-Wert von Salpetersäure bei -1,32, der von Schwefelsäure bei -3, der von Salzsäure bei -6 und der von Jodwasserstoff bei -10. Säurereste - also die Anionen der Säuren - können als Elektronenpaardonatoren auftreten, sie sind also Lewis-Basen. Erfindungsgemäß werden zum Einsatz als Lewis-Basen, die Anionen zumindest einer Brønstedt-Säure, die ja auch immer eine Lewis-Basen ist, mit einem pKₛ-Wert von ≤ -3,0 bevorzugt. Erfindungsgemäß ist es aber auch möglich, dass die Lewis-Basen und/oder Lewis-Säuren keine Brønstedt-Basen bzw. Brønstedt-Säuren sind.

Als Supersäuren werden in der Chemie Säuren bezeichnet, die stärker als konzentrierte Schwefelsäure sind (siehe z. B. F. Hall, J. B. Conant: "A Study of superacid solutions. I. The use of chloranil in glacial acetic acid and the strength of certain weak bases", in: J. Am. Chem. Soc. 1927, 49, 3047-3061). Weil sich aber im wässrigen Milieu nicht nachweisen lässt, dass eine Supersäure stärker als konzentrierte Schwefelsäure ist, wird zur Quantifizierung der Säurestärke von Supersäuren die Hammettsche Aciditätsfunktion H₀verwendet (siehe z. B. L. P. Hammett, A. J. Deyrup: "A series of simple basic indicators. I. The acidity functions of mixtures of sulfuric acid and perchloric acids with water", in: J. Am. Chem. Soc. 1932, 54, 2721-2739). Der H₀-Wert von konzentrierter Schwefelsäure liegt bei -11,93. Demgemäß weisen Supersäuren einen H₀-Wert von <-12 auf. Beispielsweise hat die Hexafluorantimonsäure einen H₀-Wert im Bereich von -21 bis -23. Das daraus resultierende Anion (SbF₆⁻) ist im Sinne der Brønstedt-Definition nur schwach nukleophil, also schwach basisch, jedoch im auf Lewis-Säuren und -Basen angewandten HSAB-Konzept (englisch: Hard and Soft Acids and Bases) - nach seinem Urheber auch Pearson-Konzept genannt - eine sogenannte harte Base, d. h. ein kaum polarisierbares, jedoch stark polarisierendes Teilchen mit hoher Ladungsdichte. Ähnliches gilt beispielsweise auch für die Trifluormethansulfonsäure CF₃SO₃H, deren Säurereste Triflatanionen sind. Harte, weiche und mittlere Lewis-Säuren und -Basen entsprechend dem HSAB-Konzept sind einschlägigen Tabellenwerken zu entnehmen.

Erfindungsgemäß bevorzugt ist, dass die Supersäure entsprechend der Hammettschen Aciditätsfunktion einen H₀-Wert im Bereich von -14 bis -30, bevorzugt im Bereich von -20 bis -27, aufweist.

Die EP 3 255 113 A1 betrifft ein Verfahren zur Herstellung einer Kleb- und/oder Dichtstoffzusammensetzung. Dieses Dokument widmet sich dabei insbesondere der Entwicklung eines Verfahrens, mittes dessen der Klebrigkeitswert der hergestellten Kleb- und/oder Dichtstoffzusammensetzung über einen weiten Bereich einstellbar ist und welches die Erzielung sehr hoher Klebrigkeitswerte ermöglicht. Darüber hinaus soll auch einem Bedarf nach einem wirtschaftlicheren und praktikableren Verfahren zur Herstellung der Kleb- und/oder Dichtstoffzusammensetzung mit einer derart hohen Klebrigkeit Rechnung getragen werden, ohne dass eine spezielle Ausrüstung oder die Verwendung von speziellen Organika oder wärmeaktivierbaren Rheologie-Controllern dafür notwendig wäre. Das Dokument erwähnt Mischungen enthaltend silanmodifizierte Polymere, wie Tegopac und Geniosil, sowie den Einsatz von Katalysatoren wie Zinn oder einer Lewis-Säure-Komponente, wobei diesbezüglich die Übergangsmetalle Zirkonium, Hafnium, Zink, Bor, Aluminium und Wismut angesprochen angesprochen werden. Entsprechend der o. g. Zielstellung, den Einsatz von wärmeaktivierbaren Rheologie-Controllern zu vermeiden, ist dabei keinerlei Hemmung der Lewis-Komponenten vorgesehen.

Was die im Gegensatz dazu vorgesehene erfindungsgemäße Reaktionshemmung des Kations betrifft, so kann diese - außer durch die bereits erwähnte sterische Hinderung oder zusammen mit derselben - auch durch eine Inhibierung der Zersetzung des Lewis-Säure-Base-Addukts, insbesondere durch eine Verhinderung seiner Dissoziation, bewirkt werden. Hierzu ist auch das Prinzip des Einsatzes von Schutzgruppen anwendbar. Unter Schutzgruppen werden dabei Substituenten verstanden, die in ein Molekül eingeführt werden, um eine bestimmte funktionelle Gruppe vorübergehend zu schützen und so eine unerwünschte Reaktion an dieser Gruppe zu verhindern. Z. B. nach der Durchführung einer an anderer Stelle des Moleküls gewünschten Reaktion wird dann, wenn eine Reaktion an der geschützten funktionellen Gruppe in Gang gesetzt werden soll, die Schutzgruppe wieder abgespalten. Für viele funktionelle Gruppen sind mehrere mögliche Schutzgruppen bekannt, die sich in ihrer Stabilität und den Bedingungen für ihre Abspaltung unterscheiden. So kann insbesondere die Lewis-Säure mindestens eine Schutzgruppe enthalten.

Die Eigenschaft der sterischen Hinderung bezeichnet einen inhibierenden Einfluss der räumlichen Ausdehnung und/oder Gestalt des Ions auf einen Reaktionsverlauf. Wenn sich in der Umgebung der Reaktanden große und raumerfüllende Gruppen - wie im erfindungsgemäßen Fall anstelle von Wasserstoff bevorzugt Organylgruppen - befinden, verlaufen manche Reaktionen nur sehr langsam, oder sie laufen gar nicht ab, wenn die sterisch hindernden Gruppen entsprechend lang sind. Dies kann damit begründet werden, dass der Übergangszustand der Reaktion auf einem erhöhten Energieniveau liegt, da die "sperrigen" Organylgruppen sehr nahe aneinander rücken und es zu einer elektrostatischen Abstoßung der Elektronenhüllen kommt. Thermodynamisch wird also eine höhere Aktivierungsenergie für das Ablaufen einer Reaktion benötigt, die unter Reaktionsbedingungen ohne sterische (oder andere) Hinderung niedriger liegt, wodurch eine Aktivierung sehr schnell erreicht werden kann.

Mit der erhöhten Aktivierungsenergie verbunden ist eine kinetische Hemmung der Umsetzung der behinderten Reaktanden. Sofern die Reaktion abläuft, ist sie durch die Hinderung bzw. Hemmung verlangsamt. Mittels der Kettenlänge und der chemischen Natur der sterisch hindernden Organylgruppen, insbesondere durch eine geeignete Kombination von aromatischen und aliphatischen Gruppenbestandteilen, kann also mit Vorteil eine "maßgeschneiderte" Aktivierungsenergie und Reaktionskinetik der Vernetzung eingestellt werden.

Der Erfindung liegt dabei der Gedanke zugrunde, einen Katalysator zu benutzen, welcher erst durch eine Aktivierung wirksam wird, wobei er insbesondere zur Initiierung eines kationischen Startmechanismus eine Herabsetzung des pH-Wertes möglich macht. Durch den erfindungsgemäßen Katalysator kann dabei eine gemäß dem Stand der Technik - verglichen mit Methanolresten - geringe Hydrolysegeschwindigkeit der in einem ethoxylierten silanhaltigen Polymer enthaltenen Ethanolreste beschleunigt werden. Allgemein gesprochen, kann insbesondere die Hydrolyegeschwindigkeit, welche - je nach der Konstitution und Anbindung des Alkoxy-Restes im Molekül - verschieden ausfallen kann, gesteuert, insbesondere beschleunigt, werden.

In dem erfindungsgemäß als Vernetzungskatalysator eingesetzten Lewis-Säure-Base-Addukt liegt insbesondere eine ionische Bindung vor, wobei es sich bei dem Addukt insbesondere um ein neutral reagierendes Komplexsalz handelt. Die Konstituenten des Addukts können jedoch in wasserfreien, polaren, organischen Lösungsmitteln, wie insbesondere in einem Glycidether oder in Propylencarbonat, leicht dissoziieren, wobei durch Solvatisierung eine Stabilisation der gelösten Teilchen in der Lösung stattfindet. Dadurch können die Addukt-Konstituenten - sich in synergistischer Weise in ihrer Wirkung gegenseitig verstärkend - als Ko-Katalysatoren auftreten und sind dadurch den bekanntermaßen für die Vernetzung eingesetzten Katalysatoren überlegen.

Jedenfalls wurde gefunden, dass erfindungsgemäß nicht nur methoxilierte, sondern vorteilhafterweise auch ethoxysilierte Präpolymere mit höchster Effizienz in den für die Vernetzung eingesetzten Reaktionssystemen katalysiert werden können. Dadurch wird es möglich, die angestrebte Vernetzung mit hoher Durchsatzgeschwindigkeit durch einen Ofen innerhalb einer bisher nur für methoxilierte Präpolymere charakteristisch kurzen Trocknungsphase vollständig, d. h. mit einem hinreichenden Vernetzungsgrad, ablaufen zu lassen.

Formal gesehen ist bei der Hydrolyse für jede Si-O-Si-Bindung ein Molekül Wasser erforderlich, damit Reste von je zwei Si-O-R als R-OH abgespalten werden können. Überraschenderweise ist dabei aber erfindungsgemäß keine nennenswerte zusätzliche Feuchtigkeitszufuhr in den Ofen notwendig, da unter der hydrolytischen Wirkung des Katalysators auf die Alkylgruppen die Umgebungsfeuchte zur Initiierung der Reaktion ausreicht, wobei bei der Reaktion entstehendes Wasser dann - rückwirkend - ebenfalls hydrolytisch zur Wirkung kommen kann.

Im Rahmen der Erfindung ist es mit Vorteil möglich, dass die zu vernetzenden alkoxylierten silanhaltigen Präpolymere - zusammen mit den anderen Ausgangsstoffen - als ein Ein-Komponenten-System vorliegen.

Allerdings kann - wie an sich bekannt - in einem Zwei-oder Mehr-Komponenten-System der Haftklebstoff auch aus zwei Gemischen von kettenförmigen silanmodifizierten alkoxysilierten Polymeren bzw. Präpolymeren hergestellt werden, die bevorzugt erst unmittelbar vor der Vernetzungsreaktion zusammengebracht werden.

Das zu vernetzende System kann mindestens ein erstes, silanmodifiziertes, an der Kette insbesondere seitenständig ethoxysiliertes Präpolymer und mindestens ein zweites silanmodifiziertes, an der Kette endständig und/oder seitenständig ethoxysiliertes und/oder methoxysiliertes Präpolymer enthalten. Das erste Präpolymer und das zweite Präpolymer werden dabei unter Abspaltung von Alkohol, wie Methanol und/oder Ethanol, also unter Ablauf einer Kondensationsreaktion, miteinander vernetzt. Das erste, silanmodifizierte und an der Kette seitenständig ethoxysilierte Präpolymer kann bevorzugt ein längerkettiges Präpolymer sein als das zweite kürzerkettige, an der Kette endständig und/oder seitenständig ethoxysilierte und/oder methoxysilierte Präpolymer, wobei der Polymerisationsgrad des zweiten Präpolymers kleiner ist als der Polymerisationsgrad des ersten Präpolymers, und wobei die Polymerisationsgrade insbesondere um mindestens zwei Zehnerpotenzen differieren.

Im Sinne einer minimierten Methanolfreisetzung bei der Vernetzung kann dabei insbesondere vorgesehen sein, dass ein Gesamtanteil von silanmodifizierten methoxysilierten Präpolymeren im Gemisch der kettenförmigen silanmodifizierten alkoxysilierten Präpolymere höchstens 50 Ma.-% beträgt. Von besonderem Vorteil ist es, wenn ein Anteil von längerkettigen, endständig silanmodifizierten, alkoxysilierten Präpolymeren kleiner ist als 15 Ma.-% der Summe der Masse von Präpolymeren, Harz, Katalysator und gegebenenfalls vorhandenen weiteren Inhaltsstoffen.

Das ethoxylierte silanhaltige Polymer oder das erste Präpolymer und/oder das zweite Präpolymer der Mischung können als funktionelle Gruppen Amino-, Glycidoxy-, Schwefel- und/oder Methacryloxy-Gruppen im Molekül enthalten, die in γ-Stellung über eine Propylenbrücke oder vorzugsweise in α-Stellung über eine Methylengruppe an mindestens ein Silicium-Atom des ethoxysilierten und/oder methoxysilierten Präpolymers gebunden sind. Um die Reaktionsträgheit eines lateral substituierten ersten Präpolymers auszugleichen, kann dadurch also insbesondere der sogenannte α-Effekt genutzt werden.

Unter dem α-Effekt wird dabei Folgendes verstanden: Bekannte organofunktionelle Silane sind zumeist Trialkoxysilane mit einer Propylenbrücke zwischen dem Si-Atom und einer an diesem angebundenen weiteren funktionellen Gruppe X. Als funktionelle Gruppen X sind - wie vorstehend aufgeführt - insbesondere Amino-, Glycidoxy-, Schwefel- und Methacryloxy-Gruppen von Bedeutung. Durch einen Ersatz der Propylenbrücke durch eine kürzere Methylenbrücke wird eine extrem erhöhte Reaktivität der Si-Alkoxygruppen erzielt. Diese resultiert aus einer elektronischen Wechselwirkung der funktionellen Gruppe X mit dem Si-Atom, die nur in dieser α-Stellung beobachtet wird, weswegen man vom sogenannten α-Effekt und von α-Chemie spricht. Z. B. aktiviert die Nachbarschaft eines elektronegativen Donors, wie Stickstoff oder Sauerstoff in α-Stellung zum Silicium-Atom, also nur durch eine Methylenbrücke davon getrennt, die Alkoxyfunktionen am Silicium-Atom. Diese sind damit gegenüber Nucleophilen reaktiver. Bei Zutritt von Wasser heißt das, dass sie schneller hydrolysieren.

Im Gegensatz zu den im Stand der Technik gut etablierten Standardsilanen mit Propylenspacer (γ-Silane) stellen bei den α-Silanen neben den Trialkoxy- auch die Dialkoxysilane wichtige Bausteine der zu synthetisierenden Polymere dar. Durch den Einsatz von difunktionellen Silanen kann beispielsweise bei der Vernetzung eine gezielte Einstellung der Vernetzungsdichte erfolgen.

Außerdem führt - mit dem Einsatz des erfindungsgemäßen Katalysators synergistisch zusammenwirkend - auch der α-Effekt zu einer geringeren Reaktivitätsdifferenz zwischen Methoxy- und Ethoxy-Silylgruppen. Damit wird es noch besser möglich, Methoxysilane durch Ethoxysilane zu ersetzen, ohne gleichzeitig die Anwendungseigenschaften zu verschlechtern und die Herstellungszeit zu verlängern, wobei die bei der Kondensation erfolgende Freisetzung von Methanol minimiert wird. Dabei bestehen - wie bereits erwähnt - gleichzeitig Vorteile gegenüber den Kautschuk-Hotmelts im Bereich der gesteigerten Temperatur- und Lösungsmittelbeständigkeit.

Der entstehende, erfindungsgemäß hergestellte SMP-Haftklebstoff vereinigt hohe Klebkräfte mit hohen Scherfestigkeiten und erfüllt damit hohe klebetechnische Anforderungen, welche in den gleichen Größenbereichen liegen, wie sie von den Klebeeigenschaften von SBPSA bekannt sind. Die mit den erfindungsgemäß hergestellten Haftklebstoffen erzielten Klebkräfte dokumentieren dabei eine hohe Adhäsion auf verschiedenen Untergründen, insbesondere - im Vergleich mit den Klebstoffen, die mit den bekannten Katalysatoren hergestellt werden - auch eine verbesserte Haftung auf niederenergetischen, beispielsweise aus Polyolefinen bestehenden, Oberflächen. In Kombination mit diesen hohen Klebkräften werden vorteilhafterweise auch hohe Scherfestigkeiten erreicht, die bei 70 °C größer sind als 10000 min. Dies dokumentiert, dass die bei der Vernetzung entstehenden intermolekularen Verknüpfungen im erfindungsgemäßen Haftklebstoff zu einem dichten Netzwerk mit einer entsprechend hohen inneren Festigkeit führen.

Ein Masseanteil des Katalysators - bezogen auf die Summe der Massen des alkoxylierten silanhaltigen Polymers oder der Mischung aus Präpolymeren und der Massen des Harzes, des Katalysators und gegebenenfalls vorhandener weiterer Inhaltsstoffe kann im Bereich von 0,2 % bis 10,0 %, vorzugsweise im Bereich von 0,6 % bis 5,0 % liegen.

Weitere vorteilhafte Ausführungen der Erfindung sind in den Unteransprüchen und der nachfolgenden speziellen Beschreibung enthalten.

Im Folgenden wird die Erfindung anhand eines Beispiels unter Bezugnahme auf die beiliegende Zeichnung näher erläutert. Es zeigen:
- Fig. 1: eine chemische Strukturformel eines im Rahmen der Erfindung bevorzugt einsetzbaren Katalysators,
- Fig. 2: in schematisierter Strukturformelansicht den in Fig. 1 dargestellten Katalysator mit einem bevorzugt einsetzbaren Lösungsmittel,
- Fig. 3: eine chemische Strukturformel einer Gruppe von im Rahmen der Erfindung bevorzugt im Katalysator als Lewis-Säuren einsetzbaren organylgruppenhaltigen Halogen-Onium- Kationen,
- Fig. 4: in unterschiedlichen Darstellungsarten, die Struktur der Lewis-Base des in Fig. 1 und 2 dargestellten Katalysators.
- Fig. 5: zwei schematisierte chemische Grundgleichungen zum Ablauf des erfindungsgemäßen Verfahrens unter Einsatz eines ethoxylierten silanhaltigen Polymers,
- Fig. 6: eine schematisierte chemische Grundgleichung zum Ablauf eines Vorab-Schrittes des erfindungsgemäßen Verfahrens zur Ausbildung eines urethangruppenhaltigen alkoxylierten silanhaltigen Präpolymers,
- Fig. 7: eine diagrammatische Darstellung von Ergebnissen rheologischer Messungen zur Indikation der erhöhten Vernetzungsgeschwindigkeit im erfindungsgemäßen Verfahren, verglichen mit dem Stand der Technik,
- Fig. 8 und 9: zwei chemische Gleichungen zur Beschreibung eines ersten und eines zweiten Reaktionsschrittes zur Aktivierung des im erfindungsgemäßen Verfahren eingesetzten Katalysators,
- Fig. 10 bis 13: vier jeweils durch chemische Gleichungen beschriebene Reaktionsschritte zur hydrolytischen Zersetzung eines alkylierten silanhaltigen Polymers in einem Teilschritt des erfindungsgemäßen Verfahrens (Basenreaktion),
- Fig. 14 bis 16: drei weitere jeweils durch chemische Gleichungen beschriebene Reaktionsschritte zur hydrolytischen Zersetzung eines alkylierten silanhaltigen Polymers in einem Teilschritt des erfindungsgemäßen Verfahrens (Säurereaktion),
- Fig.17: eine weitere diagrammatische Darstellung von Ergebnissen rheologischer Messungen zur Indikation der erhöhten Vernetzungsgeschwindigkeit im erfindungsgemäßen Verfahren, verglichen mit dem Stand der Technik.

In den verschiedenen Figuren der Zeichnung sind gleiche Teile stets auch mit den gleichen Bezugszeichen versehen, so dass sie in der Regel auch jeweils nur einmal beschrieben werden. Dabei wird zu der anschließenden Beschreibung ausdrücklich betont, dass die Erfindung nicht auf das ausgewählte Ausführungsbeispiel und dabei auch nicht auf alle oder mehrere Merkmale von beschriebenen Merkmalskombinationen beschränkt ist, vielmehr kann jedes einzelne Teilmerkmal des Ausführungsbeispiels auch losgelöst von allen anderen im Zusammenhang damit beschriebenen Teilmerkmalen für sich eine erfinderische Bedeutung haben.

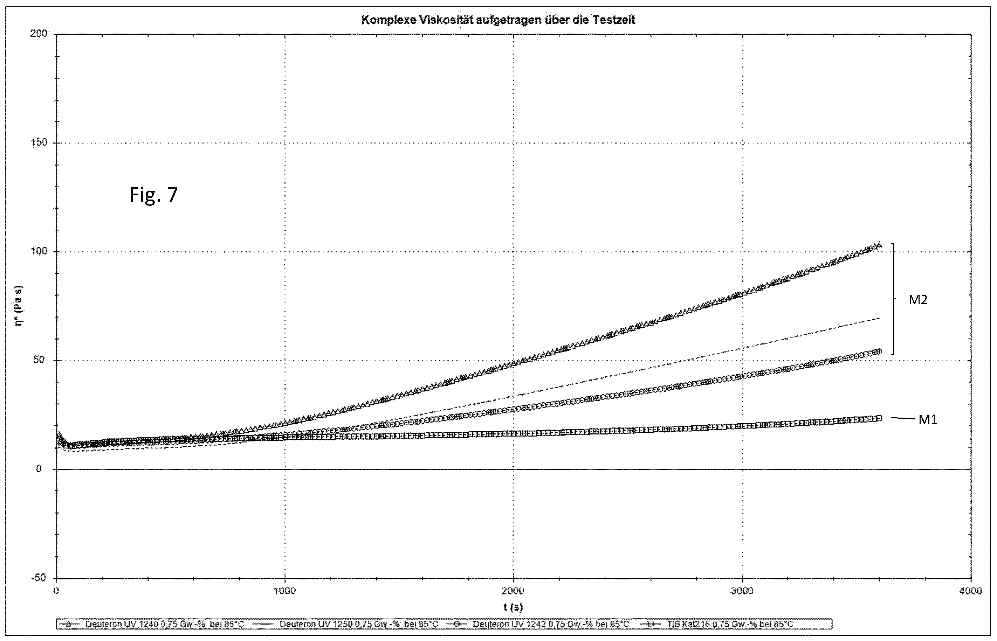

In der nachstehend aufgeführten Ausführungsform der Erfindung wird exemplarisch eine erfindungsgemäß bevorzugte Haftklebstoff-Rezeptur (Mischung 2, Bezugszeichen M2 in Fig. 7) vorgestellt, die sich insbesondere durch die Natur des Katalysators von den bekannten Rezepturen unterscheidet. Diese Rezeptur wird einer Vergleichsrezeptur (Mischung 1, Bezugszeichen M1 in Fig. 7) gegenübergestellt, wobei als Ausgangsstoffe die in der nachstehenden Tabelle 1 genannten Ausgangsstoffe zum Einsatz kamen.

**Tabelle 1: Haftklebstoff-Rezepturen (Angaben in Ma.-%)**

| Rezepturen (Angaben in Masseprozent) | | | |
|---|---|---|---|
| Funktion | Ausgangsstoff | M1 Vergleich | M2 Erfindung |
| Polymere | Tegopac Seal 100 | 24,29 | 24,17 |
| | Polymer ST 61 LV | 12,10 | 12,03 |
| Reaktivverdünner | Tegopac RD 1 | 12,10 | 12,03 |
| Flüssigadditive | Dynasylan AMMO | 1,05 | 1,04 |
| | Dynasylan VTMO | 1,99 | 1,98 |
| Harz | Dertophene H150 | 48,23 | 47,99 |
| Katalysatoren | TIB-KAT^{®} 216 | 0,25 | 0,00 |
| | Deuteron UV 1242 | 0,00 | 0,75 |
| Summe | | 100,00 | 100,00 |

Im Sinne einer vertieften Verständlichkeit werden in Tabelle 1a dieselben Rezepturen nochmals in phr (parts per hundred rubber) angegeben, wobei die normierenden "100 Teile Rubber" durch die Menge des ersten Präpolymers (Tegopac Seal 100) gebildet werden.

**Tabelle 1a: Haftklebstoff-Rezepturen (Angaben in phr)**

| Rezepturen (Angaben in phr) | | | |
|---|---|---|---|
| Funktion | Ausgangsstoff | M1 Vergleich | M2 Erfindung |
| Polymere | Tegopac Seal 100 | 100,0 | 100,0 |
| | Polymer ST 61 LV | 49,8 | 49,8 |
| Reaktivverdünner | Tegopac RD 1 | 49,8 | 49,8 |
| Flüssigadditive | Dynasylan AMMO | 4,3 | 4,3 |
| | Dynasylan VTMO | 8,2 | 8,2 |
| Harz | Dertophene H150 | 198,6 | 198,6 |
| Katalysatoren | TIB-KAT^{®} 216 | 1,0 | 0,00 |
| | Deuteron UV 1242 | 0,00 | 3,1 |
| Summe | | 411,7 | 413,7 |

Hieraus wird deutlich, dass die Rezepturbestandteile - abgesehen von den Katalysatoren, deren Wirkung zu vergleichen ist - in Bezug auf das Hauptpolymer in identischen Teilen vorhanden sind.

Bei Tegopac Seal 100 (Lieferant: Fa. Evonik) handelt es sich um ein endständig lateral ethoxysiliertes Polypropylenglykol, das in den Mischungen als ein erstes Präpolymer eingesetzt wurde. Tegopac Seal 100 ist ein Präpolymer, bei dem alkoxyfunktionelle Silangruppen, insbesondere Ethoxygruppen, nicht terminal in das Gerüst des Polymers eingebaut sind, sondern gezielt seitenständig verteilt über die Kette des molekularen Grundgerüstes angeordnet sind, wobei sich diese seitenständig alkoxyfunktionellen Silangruppen aber insbesondere an den Enden der Ketten befinden. Mittels der über die Molekülkettenlänge verteilt eingebauten Vernetzungseinheiten können wichtige Eigenschaften, wie die Vernetzungsdichte, gesteuert werden. Tegopac Seal 100 weist somit neben dem Vorteil der Ethanolabspaltung die Eigenschaft auf, dass aufgrund der Seitenkettensubstitution eine leichtere dreidimensionale Vernetzung erfolgen kann, welche zu einem sehr dichten Netzwerk und daher zu einer hohen Scherfestigkeit führt. Es hat eine kinematische Viskosität von 55 Pas bei 23 °C. Tegopac Seal 100 hat eine Kettenlänge im Bereich von 12 K bis 18 K, im Mittel von 15 K, wobei 1 K einer Kettenlänge mit einer molaren Masse von 1000 g/mol entspricht.

Als eine Gesamtkettenlänge, der die jeweilige molare Masse entspricht, ist dabei die Summe der molaren Masse der Hauptkette und - wenn vorhanden - aller Seitenketten anzusehen. So kann mindestens eines der beiden Präpolymere, oder es können auch beide Präpolymere, aus verzweigten oder unverzweigten Kettenmolekülen bestehen, wobei die endständige und/oder seitenständige Silanmodifizierung in einem verzweigten Molekül an einer Seitenkette und/oder an der Hauptkette vorliegen kann.

Bei den anmeldungsgemäß angegebenen Molekularmassen (Synonyme: Molmasse, molare Masse) handelt es sich, wie bei Polymeren üblich, um eine mittlere molare Masse. Hier gibt es eine Unterscheidung zwischen Mₙ (Zahlenmittel), M_{w} (Gewichtsmittel) und Mz (Zentrifugenmittel). Dabei gilt immer, dass Mₙ < M_{w} < Mz ist. Letztlich basiert diese Unterscheidung nur auf verschiedenen statistischen Methoden, um die Verteilung der molaren Masse zu beschreiben. Gleich sind diese Werte nur in dem theoretischen Fall, dass alle Moleküle tatsächlich die gleiche Molmasse haben und keine Verteilung vorliegt. Bei den in den Prospekten der verschiedensten Hersteller enthaltenen Angaben handelt es sich in der Regel um das Zahlenmittel Mₙ, welches die bei weitem üblichste Angabe zur Charakterisierung eines solchen Mittelwertes ist. Durch Quotientenbildung M_{w}/Mₙ lässt sich dabei die sogenannte Polydispersität D berechnen, welche ein Maß für die Breite der Molmassenverteilung ist. Die Art und Breite der Molmassenverteilung erscheinen für die Erfindung nicht von Bedeutung, da sie sich technisch bedingt im Herstellungsverfahren stets in ähnlicher Form einstellen.

Die molare Masse kann beispielsweise nach der Norm DIN EN ISO 16014-5:2012-10 Kunststoffe - Bestimmung der durchschnittlichen Molmasse und der Molmassenverteilung von Polymeren mittels Gelpermeationschromatographie - Teil 5: Lichtstreudetektionsverfahren (ISO 16014-5:2012); Deutsche Fassung EN ISO 16014-5:2012 bestimmt werden Die Norm legt ein allgemeines Verfahren zum Bestimmen der durchschnittlichen Molmasse und der Molmassenverteilung von Polymeren durch GPC-LS, das heißt Gelpermeationschromatographie (GPC), gekoppelt mit Messung durch Lichtstreuung (LS), fest. Die durchschnittliche Molmasse und die Molmassenverteilung werden aus den Daten für die Molmasse und die Massenkonzentrationen berechnet, die kontinuierlich mit der Elutionszeit bestimmt werden. Die Molmasse bei jeder Elutionszeit wird als Absolutwert bestimmt, indem ein Detektor für die Lichtstreuung mit einem Konzentrationsdetektor kombiniert wird. Die GPC-LS wird deshalb als ein absolutes Verfahren klassifiziert.

Ein weiteres Verfahren, um die molare Masse zu bestimmen, ist in der DIN EN ISO 4629-2:2016-12 Bindemittel für Beschichtungsstoffe - Bestimmung der Hydroxylzahl - Teil 2: Titrimetrisches Verfahren mit Katalysator (ISO 4629-2:2016); Deutsche Fassung EN ISO 4629-2:2016 beschrieben. Die Hydroxylzahl (OHZ) ist ein Maß für den Gehalt an Hydroxygruppen in organischen Materialien, z. B. in Harzen, Lacken, Polyesterolen, Fetten und Lösungsmitteln. Bei bekannter molekularer Struktur kann aus der Hydroxylzahl die molare Masse berechnet werden. Es gibt mehrere unterschiedliche genormte Verfahren zur Bestimmung der Hydroxylzahl von Harzen. Das klassische Verfahren mit Verwendung von Pyridin ohne Katalysator ist in ISO 4629-1 festgelegt. Die Vorteile des Verfahrens mit Katalysator sind folgende: die verwendeten Lösemittel sind weniger gesundheitsschädlich, der Lösemittelverbrauch ist geringer, das Verfahren ist wegen kürzerer Reaktionszeiten schneller, der Umschlagpunkt der Titration ist besser erkennbar, Polyole sind schneller löslich.

Die Ergebnisse der einzelnen Bestimmungsverfahren differieren nur in einer für die Erfindung unkritischen Weise voneinander. Sie können daher beide Anwendung finden.

Bei Polymer ST 61 LV (Lieferant: Fa. Evonik) handelt es sich um ein lineares endständig lateral silanmodifiziertes Polyurethan-Polyether-Copolymer, das in der Mischung als ein zweites, dabei längerkettiges Präpolymer eingesetzt wurde. Das Evonik-Polymer ST 61 LV ist ein silanterminiertes Polyurethan, welches in Bezug auf seine kinematische Viskosität ein Analogon zu dem Polymer der Fa. Wacker GENIOSIL^{®} STP-E 10 darstellt, das alternativ in gleichen Anteilen eingesetzt werden könnte, ohne dass dadurch nennenswerte Unterschiede in den resultierenden Haftklebstoffeigenschaften auftreten würden. Bei GENIOSIL^{®} STP-E10 handelt es sich um einen Dimethoxy(methyl)silylmethylcarbamat-terminierten Polyether mit zwei endständigen Dimethoxysilan-Gruppen, mit einer mittleren molaren Masse von 8889 g/mol, mit einer Polydispersität von etwa 1.6 und einer Menge von funktionellen Silyl-Gruppen E(t) von 0.225 Milliäquivalent bezogen auf ein Gramm des Polymers. Seine dynamische Viskosität bei 25 °C - gemessen nach DIN 51562 - liegt bei 10 Pas. Die chemische Konstitution des Evonik-Präpolymer-Typs ST 61 LV entspricht von der Basis her - im Gegensatz zu dem genannten Wacker-Präpolymer-Typ, der ein α-Silan ist - aber den γ-Silanen. Ein vergleichbares Wacker-Präpolymer, das ein γ-Silan ist, jedoch eine etwas höhere Viskosität aufweist, ist GENIOSIL^{®} STP-E15.

Bei dem - auch "Booster" genannten - Reaktivverdünner Tegopac RD 1 (Lieferant: Fa. Evonik) handelt es sich um ein ethoxysiliertes, endständig lateral silanmodifiziertes Präpolymer, das in der Mischung als ein zweites, dabei kürzerkettiges Präpolymer eingesetzt wurde. Die Viskosität bei 23 °C liegt bei 1 Pas. Tegopac RD1 hat eine Kettenlänge im Bereich von 4 K bis 7 K, im Mittel von 5,5 K.

Von den in Tabelle 1 genannten Flüssigadditiven ist Dynasylan AMMO (Lieferant: Fa. Evonik) ein 3-Aminopropyltrimethoxysilan, das als Vernetzer und Haftvermittler dient. Der Einsatz des genannten Haftvermittlers zeigt bei Einsatzmengen von 0,1 % - 2 % haftungsverstärkende Eigenschaften auf verschiedenen Untergründen, insbesondere auch auf niederenergetischen Oberflächen. Das Flüssigadditiv Dynasylan VTMO (Lieferant: Fa. Evonik) ist ein Vinyltrimethoxysilan, welches zur Erhöhung der Lagerstabilität bzw. zur Reaktionssteuerung als Wasserfänger fungiert. Hierdurch wird die Hydrolyse soweit gebremst, dass eine Vernetzung nicht schon vorzeitig bei der Mischung stattfindet. Die Mischungen M1, M2 stellen also vom Wesen her Ein-Komponenten-Systeme mit hinreichender Lagerstabilität dar.

In beiden Rezepturen M1, M2 wurde als Harz Dertophene H 150 der Firma DRT eingesetzt, bei dem es sich um ein Terpen-Phenol-Harz mit einem Erweichungspunkt von 118 °C (bestimmt nach dem Ring-Ball-Verfahren) handelt. Als geeignete klebrig machende Harze (Tackifier) können jedoch auch andere phenolmodifizierte Terpenharze, wie z. B. Dertophene T 105 der gleichen Firma, sowie auch Kohlenwasserstoffharze, Rosinesterharze, Acrylharze und deren Mischungen eingesetzt werden. Als kompatible Harze erscheinen auch z. B. C9/C5-Kohlenwasserstoffe mit aliphatisch modifiziertem C9-Anteil geeignet, wobei die Mischbarkeit vom Gehalt an C9 abhängig ist, wobei C9-Kohlenwasserstoffharze sowie C9-Phenolharze grundsätzlich geeignet sind. Bevorzugte Harze sind - wie auch durch die Ausführungsbeispiele nahegelegt - Terpen-Phenolharze anderer Hersteller. Baumharze ("Rosin resins") sind bedingt ebenfalls verträglich mit den zu vernetzenden Präpolymeren, wobei hier die Kompatibilität von verschiedenen Faktoren, wie z. B. Molekulargewicht und Säurezahl, abhängt.

Außer den in Tabelle 1 genannten Stoffen können z. B. zusätzlich auch Alterungsstabilisatoren oder andere Additive, wie Füllstoffe, eingesetzt werden, ohne dass der Rahmen der Erfindung verlassen wird.

Wie bereits erwähnt, unterscheiden sich die Rezepturen M1, M2 - bei gleicher quantitativer Zusammensetzung - durch die Art der eingesetzten Katalysatoren. In der Mischung 1 (M1) wurde TIB-KAT^{®} 216 der Firma TIB Chemicals AG, also Dioctylzinnlaurat, als Katalysator in einer fachüblichen Menge von 1 phr (0,25 Ma.-%) eingesetzt. In zwei weiteren Vergleichsmischungen M1' und M1" wurde im Sinne einer noch höheren Vergleichbarkeit außerdem der Anteil des Katalysators auf 1,3 phr (0,33 Ma.-%) in M1' und auf 3,1 phr (0,75 Ma.-%) in M1" erhöht. In der Mischung M1' lag er damit - gemessen in phr - und in der Mischung M" - gemessen in Ma.-% - jeweils genauso hoch wie in M2.

Laurate heißen die Salze und Ester der Laurinsäure. Diese Säure mit dem systematischen chemischen Namen Dodecansäure (chemische Summenformel: C₁₂H₂₄O₂) ist eine gesättigte Fett- und Carbonsäure. Sie leitet sich von dem Alkan n-Dodecan ab. Der Name Laurinsäure stammt vom Lorbeer (lateinisch: Laurus nobilis), dessen Früchte ein fettes Öl liefern, das hauptsächlich Laurinsäure enthält.

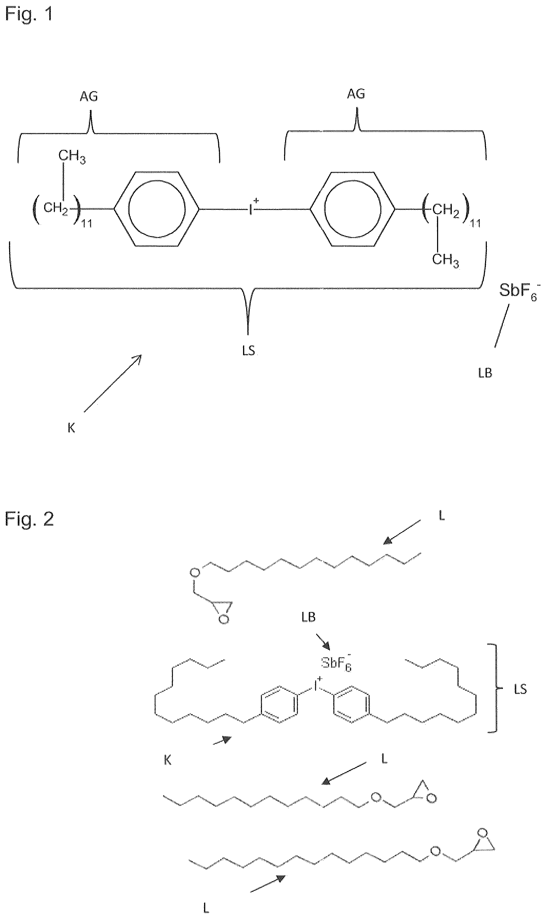

Als erfindungsgemäßer Katalysator K (siehe Fig. 1) wurde Deuteron UV 1242 eingesetzt, welcher von der Fa. Deuteron GmbH als UV-Fotoinitiator für Epoxide in ihrer Funktion als unter UV-Belichtung kationisch polymerisierende Bindemittelsysteme angeboten wird. Der Polymerisationsstart wird dabei bekanntermaßen - im Gegensatz zur Erfindung, bei der eine ausschließlich thermische Einbringung der Aktivierungsenergie erfolgt - durch Belichtung mit UV-Licht im Wellenlängenbereich von 220 - 250 nm initiiert.

Deuteron UV 1242 ist vom Aussehen her eine bräunliche, viskose Flüssigkeit mit einer Dichte von 1,1 g/cm³ und einem Flammpunkt von über 100 °C, wobei der Wirkstoff K in einer Konzentration von 50 Ma.-% in einem benzolfreien, aus C12/C14-Glycidether gebildeten Reaktivverdünner als Lösungsmittel L (siehe Fig. 2) vorliegt. Der Glycidether könnte auch 8 bis 18 Kohlenstoffatome in seinem Molekül enthalten. Bei dem Katalysator-Wirkstoff K handelt es sich um ein Lewis-Säure-Base-Addukt aus einer geblockten - also zumindest im Temperaturbereich unter 60 °C reaktionsgehemmten - Lewis-Säure und einem Antimonat, konkret um das Diphenyliodoniumsalz Bis(dodecylphenyl)-iodoniumhexafluoro-antimonat.

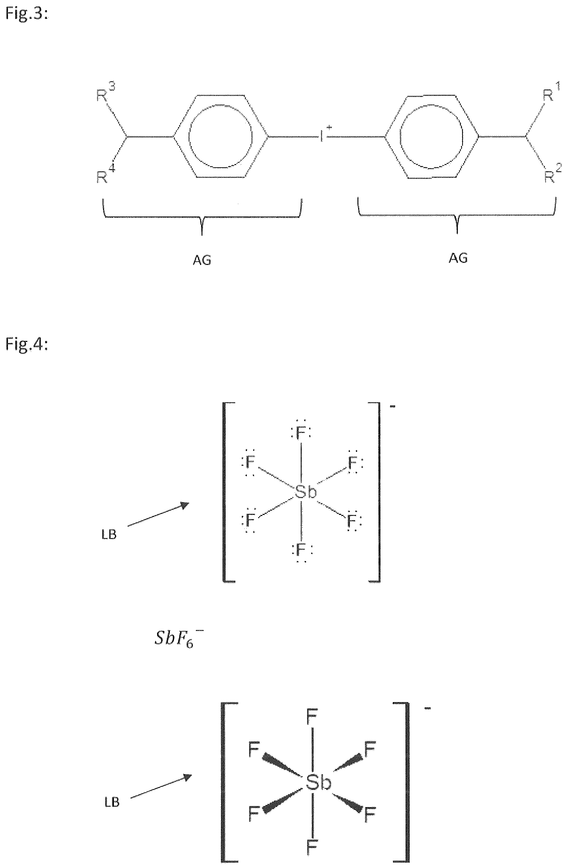

Die im Iodonium-Kation gebundenden Organylgruppen AG, die insbesondere Arylgruppen sind und als Schutzgruppen aufgefasst werden können, bewirken dabei eine Blockung der Lewis-Säure LS, wobei Blockung als eine sterische Hinderung verstanden werden kann. Aus der Eigenschaft der sterischen Hinderung resultiert - wie bereits ausgeführt - ein inhibierender Einfluss des Ions auf den Reaktionsverlauf. Thermodynamisch wird also eine höhere Aktivierungsenergie als für eine Reaktion mit einem Katalysator ohne die Blockung benötigt. Über die Kettenlänge und chemischen Natur der Organylgruppen AG, insbesondere über eine geeignete Kombination von aromatischen und aliphatischen Gruppenbestandteilen, lassen sich die Aktivierungsenergie und Reaktionskinetik der Vernetzung einstellen. Dies wird durch Fig. 3 veranschaulicht, in der an die Phenylstukturen der Lewis-Säure LS unterschiedliche, insbesondere aliphatische, Reste R₁, R₂, R₃, R₄ angebunden sind. Hierbei kann mindestens einer der Reste R₁, R₂, R₃, R₄, oder es können mehrere der Reste R₁, R₂, R₃, R₄, auch durch Wasserstoff gebildet sein. Die Lewis-Säure LS des Katalysators K gemäß Fig. 1 und 2 kann somit als ein Vertreter der durch Fig. 3 beschriebenen Lewis-Säuren-Gruppe LS angesehen werden.

Fig. 4 zeigt in ihrem oberen Teil die Lewis-Struktur und in ihrem unteren Teil die geometrische Ausbildung der Lewis-Base LB SbF₆- des in Fig. 1 und 2 dargestellten Katalysators K. Die Lewis-Base LB ist das Anion einer sehr starken anorganischen Säure, nämlich der schon vorstehend genannten Hexafluorantimonsäure. Das Ion besitzt eine oktaedrische Gestalt, wobei sich das Antimon als Zentralatom des Komplexes in der Mitte befindet. Antimon besitzt im atomaren Zustand fünf besetzte Elektronenschalen und fünf Außenelektronen. Im Ion sind dem Antimon jedoch sechs Bindungselektronenpaare zugeordnet, wobei eine π-Bindung von Hybridorbitalen vorliegt. Die sechs im Hexafluoroantimonat-Ion als Liganden an das Antimon gebundenen Fluoratome weisen jeweils eine Edelgaskonfiguration auf, die sich durch sechs jeweils gepaarte Außenelektonen, also jeweils drei Außenelektronenpaare, und ein Bindungselektronenpaar ergibt. Aufgrund des Elektronenüberschusses ist das Ion einfach negativ geladen, wobei die Ladungsdichte mit 48 als in Betracht zu ziehenden Elektronen bezogen auf den Ionenradius extremal hoch ist. Dadurch hat die Hexafluorantimonsäure den Charakter einer Supersäure bzw. das Hexafluoroantimonat den Charakter einer harten Lewis-Base LB nach dem Pearson-Konzept.

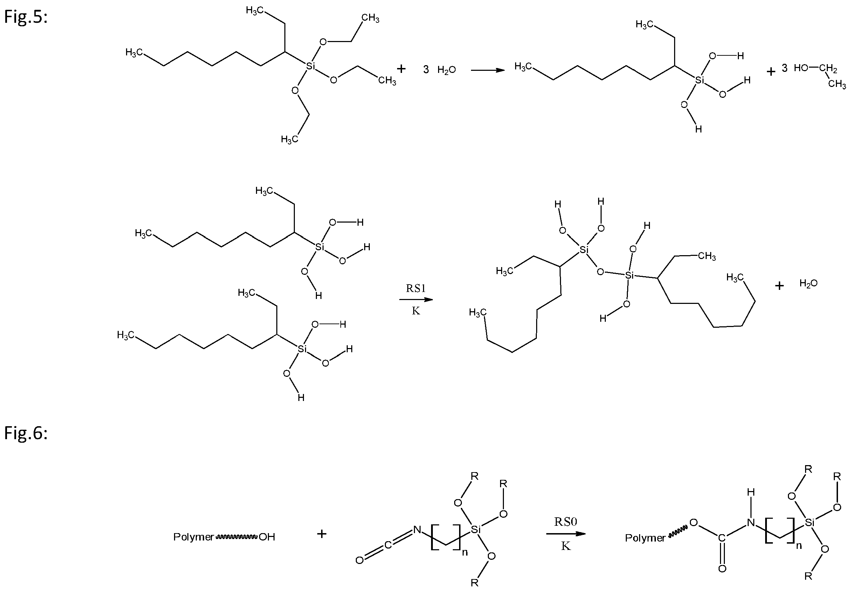

Den beiden in Fig. 5 dargestellten schematisierten chemischen Grundgleichungen ist zu entnehmen, dass sich das erfindungsgemäße Verfahrens unter Einsatz des alkoxylierten, insbesondere ethoxylierten, silanhaltigen Polymers in zwei Reaktionsschritten RS1, RS vollzieht. Im ersten Reaktionsschritt (Pfeil RS1) wird unter Zufuhr von Wasser aus dem alkoylierten, insbesondere ethoxylierten, silanhaltigen Polymer eine Alkylgruppe, wie dargestellt die Ethylgruppe Et, abgespalten und zu Alkohol, inbesondere Ethanol, umgesetzt, wobei eine Wasserstoffanbindung an den Polymerrest erfolgt. Durch den erfindungsgemäßen Katalysator K wird dabei eine gemäß dem Stand der Technik geringe Hydrolysegeschwindigkeit der Ethanolreste im Vergleich zu Methanolresten beschleunigt. An das Silizium des silanhaltigen Polymers sind im Ergebnis des ersten Reaktionsschrittes RS1 infolgedessen Hydroxylgruppen gebunden. Dadurch kann zur eigentlichen Vernetzung im engeren Sinn im zweiten Reaktionsschritt (Pfeil RS2) eine unter Abspaltung von Wasser ablaufende katalysierte (Katalysator K) Polykondensation erfolgen, wobei die Siliziumatome über Sauerstoffbrücken miteinander verbunden sind, sich also vernetzte Polysiloxane bilden. Die Reaktionsschritte RS1, RS2 können - was das Polymer betrifft - in einem Ein-Komponenten- oder Mehr-Komponenten-System erfolgen.

In Fig. 6 ist eine schematisierte chemische Grundgleichung (Pfeil RS0) zum Ablauf eines vor den in Fig. 5 dargestellten Reaktionen optional ablaufenden Vorab-Schrittes des erfindungsgemäßen Verfahrens dargestellt. Dabei erfolgt die Ausbildung eines Urethangruppen (-OCON-Gruppen) enthaltenden alkoxylierten (-OR-Gruppen enthaltenden) silanhaltigen Hybridpolymers, wie es das in den Beispielen eingesetzte, lineare endständig lateral silanmodifizierte Polyurethan-Polyether-Copolymer ST 61 LV der Fa. Evonik ist und es auch die vorstehend genannten STP-E-Typen der Fa. Wacker sind.

Zum Nachweis der erfindungsgemäß erzielbaren hohen Geschwindigkeit der Vernetzung wurden - wie bereits erwähnt im Sinne einer besseren Vergleichbarkeit - an der Vergleichsmischung M1 (Katalysatorgehalt, allerdings abweichend von Tabelle 1: 0,75 Ma.-% in M1" sowie auch insbesondere 0,00439 Molanteile in der Mischung in M1') und M2 (Katalysatorgehalt, wie in Tabelle 1: 0,75 Ma.-% gleich 0,00439 Molanteile in der Mischung) bei 85 °C rheologische Messungen durchgeführt, deren Ergebnisse in Fig. 7 diagrammatisch dargestellt sind. Hierin ist der komplexe Schubmodul G* bzw. die komplexe Viskosität η* in Pas über der Messzeit t in Sekunden aufgetragen. M1' und M2 sind unter Berücksichtigung der Stöchiometrie und der unterschiedlichen molaren Massen von herkömmlichem und erfindungsgemäß eingesetztem Katalysator besser miteinander vergleichbar als M1 und M2.

Eine Besonderheit der unter Einsatz eines Oszillationsrheometers vorgenommenen Messung dieser Größen besteht im Vergleich mit anderen rheologischen Messungen darin, dass für eine mögliche Bestimmung der Elastizität die beiden Modulanteile G' (Speichermodul) und G" (Verlustmodul) des komplexen Moduls G* getrennt bestimmt werden können (vgl. DIN 53 019 -1:2008-09 "Viskosimetrie - Messung von Viskositäten und Fließkurven mit Rotationsviskosimetern - Teil 1: Grundlagen und Messgeometrie" bzw. DIN EN ISO 3219:1994-10 "Kunststoffe - Polymere/Harze in flüssigem, emulgiertem oder dispergiertem Zustand - Bestimmung der Viskosität mit einem Rotationsviskosimeter bei definiertem Geschwindigkeitsgefälle"), wovon allerdings im Rahmen der vorgenommenen Vergleichsversuche kein Gebrauch zu machen war.

Bei der Messung mit dem Oszillationsrheometer führt das Messsystem Schwingungen aus und bringt eine Scherdeformation in die Probe, ohne dass diese aber zum Fließen gebracht wird. Der Schubmodul G* bzw. die daraus berechnete, in Fig. 7 auf der Ordinate aufgetragene komplexe Viskosität η* beschreiben dann das Verhalten der Probe. Da die komplexe Viskosität η* aufgrund der thermisch angeregten Vernetzung zunimmt, stellt sie ein Maß für den zunehmendem Vernetzungsgrad dar. Es ist zu sehen, dass bei gleicher Anfangsviskosität der beiden Mischungen M1, M2 die erfindungsgemäße Mischung M2 (Deuteron UV 1242) nach einer Stunde (3600 s) im Vergleich zu den Mischungen M1 mit dem Zinnkatalysator (TiB Kat 216) eine mehr als doppelt so hohe komplexe Viskosität η* aufwies. Bis zu etwa 1200 s (20 min) war der Viskositätsanstieg nur gering (auf etwa 14 Pas) und der Unterschied zwischen den beiden Mischungen M1, M2 war vernachlässigbar klein.

In zwei weiteren Ausführungsbespielen wurden anstelle des in Tabelle 1 genannten Katalysators K Deuteron UV 1242 als erfindungsgemäße Katalysatoren K solche mit den Handelsnamen Deuteron UV 1240 und Deuteron UV 1250 eingesetzt. Die Masseanteile der Katalysatoren K in der Rezeptur waren jeweils identisch mit dem Anteil von Deuteron UV 1242 in Tabelle 1 (0,75 Ma-%). Ebenso wurde die Mischung M2 in gleicher Weise - also wie oben beschrieben - hergestellt.

Auch die Katalysatoren K Deuteron UV 1240 und Deuteron UV 1250 werden von der Fa. Deuteron GmbH als unter UV-Belichtung kationisch polymerisierende epoxidische Bindemittelsysteme in Funktion von UV-Fotoinitiatoren angeboten. Eine solche Aktivierung durch Belichtung mit UV-Licht erfolgte erfindungsgemäß jedoch nicht. Auf den Einsatz von UV-Belichtungs-Systemen kann daher im Rahmen der Erfindung vorteilhafterweise vollständig verzichtet werden.

Deuteron UV 1240 ist vom Aussehen her ein rötliches viskoses Öl mit einer Dichte im Bereich von 1,22 g/cm³ bis 1,28 g/cm³ und einem Flammpunkt von über 135 °C, wobei der Wirkstoff K in einer Konzentration von 50 Ma.-% in einem benzolfreien, aus Propylencarbonat bestehenden Lösungsmittel L vorliegt. Bei dem Katalysator-Wirkstoff K handelt es sich um ein Lewis-Säure-Base-Addukt aus einer geblockten Lewis-Säure und einem Antimonat, konkret um das Diphenyliodoniumsalz Bis(dodecylphenyl)-iodoniumhexafluoro-antimonat.

Deuteron UV 1250 ist vom Aussehen her eine bräunliche viskose Flüssigkeit mit einer Dichte von 1,1 g/cm³ und einem Flammpunkt von über 100 °C, wobei der Wirkstoff K in einer Konzentration von 50 Ma.-% in einem benzolfreien, aus C12/C14-Glycidether gebildeten Reaktivverdünner als Lösungsmittel L (siehe Fig. 2) vorliegt. Der Glycidether könnte auch 8 bis 18 Kohlenstoffatome in seinem Molekül enthalten. Bei dem Katalysator-Wirkstoff K handelt es sich um ein Lewis-Säure-Base-Addukt aus einer geblockten Lewis-Säure und einem Antimonat, konkret um das Diphenyliodoniumsalz Bis((C10-C14)-alkylphenyl)-iodoniumhexafluoroantimonat.

Auch hier zeigte sich bei der Bestimmung der komplexen Viskosität η*, die aufgrund der thermisch angeregten Vernetzung wiederum zunahm (obere Kurven in Fig. 7), dass bei gleicher Anfangsviskosität und anfänglich ähnlich geringem Viskositätsanstieg wie bei den Vergleichsmischungen M1 (M1', M1") die erfindungsgemäßen Mischungen M2 nach einer Stunde (3600 s) sehr viel höhere komplexe Viskositäten η* aufwiesen (etwa 105 mPas bei Deuteron UV 1240 und etwa 68 mPas bei Deuteron UV 1250). Der Vernetzungsgrad lag somit noch höher als bei der Verwendung von Deuteron UV 1242 als Katalysators K in der erfindungsgemäßen Mischung M2. Da Deuteron UV 1242 und Deuteron UV 1240 sich nur hinsichtlich des als Lösungsmittel L eingesetzten Reaktivverdünners unterscheiden, erscheint das Propylencarbonat des Deuteron UV 1242 vorteilhafter als der C12/C14-Glycidether des Deuteron 1240 als Lösungsmittel L. Durch eine entsprechende Katalysatorauswahl im Rahmen der Erfindung kann somit vorteilhafterweise die Reaktivität der Mischung gesteuert werden.

Die Werte bzw. die Verlaufskurven der Vergleichsmischungen M1, M1' und M1" zeigten keine signifikanten Unterschiede im Zeitgang der komplexen Viskosität η*. Es ist daraus ableitbar, dass die Natur des Katalysators einen weitaus signifikanteren Einfluss auf die Vernetzungsgeschwindigkeit hatte als die genaue Einstellung auf einen stöchiometrisch "passgenauen" Anteil.

Aus den in Tabelle 1 beschriebenen Mischungen M1, M2 wurden Haftklebstoff-Zusammensetzungen hergestellt, indem zuerst durch ein Zwei-Schritt-Verfahren unter Zugrundelegung der Positionen gemäß Tabelle 2 eine gemeinsame Grundmischung hergestellt wurde. In einem ersten Schritt wurden dabei die jeweiligen Positionen 1 und 2 unter Vakuum auf 175 ° C gebracht und unter Rühren homogenisiert. In einem zweiten Schritt erfolgte eine Abkühlung auf 100 °C und danach eine Zugabe der unter Position 3 aufgeführten Ausgangsstoffe mit anschließender Evakuierung und unter Rühren zur Homogenisierung.

**Tabelle 2: Positionen bei der Herstellung der Grundmischung**

| Funktion | Ausgangsstoff | Position |
|---|---|---|
| Polymere | Tegopac Seal 100 | 2 |
| | Polymer ST 61 LV | 3 |
| Reaktivverdünner | Tegopac RD 1 | 2 |
| Flüssigadditive | Dynasylan AMMO | 3 |
| | Dynasylan VTMO | 3 |
| Harz | Dertophene H150 | 1 |

Danach erfolgte die Herstellung der Einzelmischungen M1, M2, indem jeweils die Grundmischung mit den in Tabelle 1 genannten Katalysatoren versetzt und unter Vakuum bei 100 °C homogenisiert wurde.

Bei der Lagerung eines derart erfindungsgemäß hergestellten (Ein-Komponenten-)Klebstoffes in Hobbocks mit luftdichten Aluminium-Inlinern, welche nach der Klebstoffeinfüllung mit Stickstoff inertisiert werden, können auch nach über einem Monat Lagerung keine Anzeichen einer stärkeren Vernetzung im Vergleich mit dem bekannten Zinn-Katalysator gefunden werden. Die Lagerstabilität wird somit nicht nennenswert beeinflusst. Selbst nach zwölf Wochen, in denen das erfindungsgemäße Produkt in einem Hobbock (mit Kabelbinder verschlossener Inliner) aufbewahrt wurde, war dieses nach der Öffnung des Behälters nicht vernetzt, sondern fließfähig.

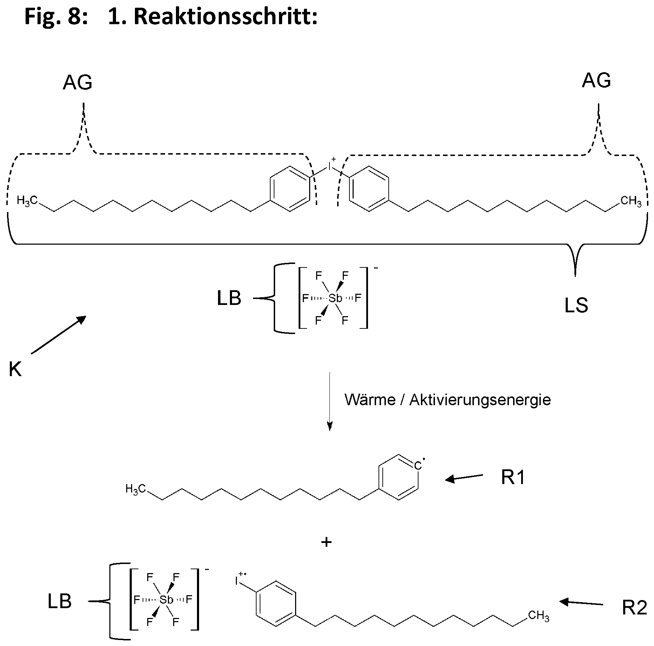

Der technisch vorteilhafte Einfluss des erfindungsgemäß eingesetzten Katalysators K der Haftklebstoffzusammensetzung M2 zeigte sich auch nach einer Beschichtung einer 50 µm dicken Polyethylenterephthalat-Folie (PET-Folie), wie dies die nachstehende Tabelle 3 zeigt. Das Gemisch zur Herstellung des Haftklebstoffes wurde dazu direkt mittels eines Kammerrakels als gleichmäßiger Film auf die Folie ausgestrichen und bei einer Temperatur im Bereich von 110 °C bis 130 °C über eine Zeitdauer im Bereich von 4 min bis 12 min einer Vernetzung (Reaktion gemäß Fig. 5 bzw. auch gemäß Fig. 8 bis 13) unterzogen.

In Tabelle 3 bedeuten: "gesamt" - das Flächengewicht aus Folie und Haftklebstoff, "RT" - bei Raumtemperatur, "PE" - auf Polyethylen, "PP" - auf Polypropylen. Es wurden also in Anlehnung an die Klebkraftmessung auf Stahl nach DIN EN 1939:2003-12 "Klebebänder - Bestimmung der Klebkraft" eine Klebkraftmessung auf Polyethylen (PE) und Polypropylen (PP) - nach jeweils 10 Minuten und 24 Stunden - durchgeführt.

Die Bestimmung der Scherfestigkeit erfolgte nach DIN EN 1943 :2003-01 "Klebebänder - Messung des Scherwiderstandes unter statischer Belastung".

Der Tabelle 3 ist dabei zu entnehmen, dass bei kaum abweichendem spezifischen Flächengewicht die erfindungsgemäße (Mischung M2) in ihren Werten der Klebkraft auf Stahl nur wenig - d. h. die geforderte Performance nicht beeinträchtigend - von den Werten der Vergleichsmischung (Mischung M1) abweicht, während die Werte der Klebkraft auf apolaren Oberflächen (PE, PP) erfindungsgemäß vorteilhaft signifikant höher liegen. Die Scherfestigkeit blieb dabei unverändert.

**Tabelle 3: Klebeeigenschaften**

| Testmethode | Einheit | M1 Vergleich | M2 Erfindung |
|---|---|---|---|
| Flächengewicht gesamt | g/m² | 141,50 | 151,50 |
| Klebkraft Stahl sofort | N/cm | 16,21 | 11,00 |
| Klebkraft Stahl 10 min | N/cm | 18,05 | 10,79 |
| Klebkraft Stahl 24 h | N/cm | 16,33 | 13,01 |
| Klebkraft PE 10 min | N/cm | 1,44 | 5,38 |
| Klebkraft PE 24 h | N/cm | 6,15 | 6,38 |
| Klebkraft PP 10 min | N/cm | 0,83 | 5,39 |
| Klebkraft PP 24 h | N/cm | 1,75 | 8,58 |
| Scherfestigkeit | | >10000 | >10000 |
| 625 mm², 1kg | min | | |
| - RT und 70 °C | | | |

Die in Fig. 8 bis 13 wiedergegebenen chemischen Gleichungen dienen einer detaillierteren Darstellung der in Fig. 5 summarisch mit dem Pfeil RS bezeichneten Reaktionen in dem ersten Teilschritt des erfindungsgemäßen Verfahrens.

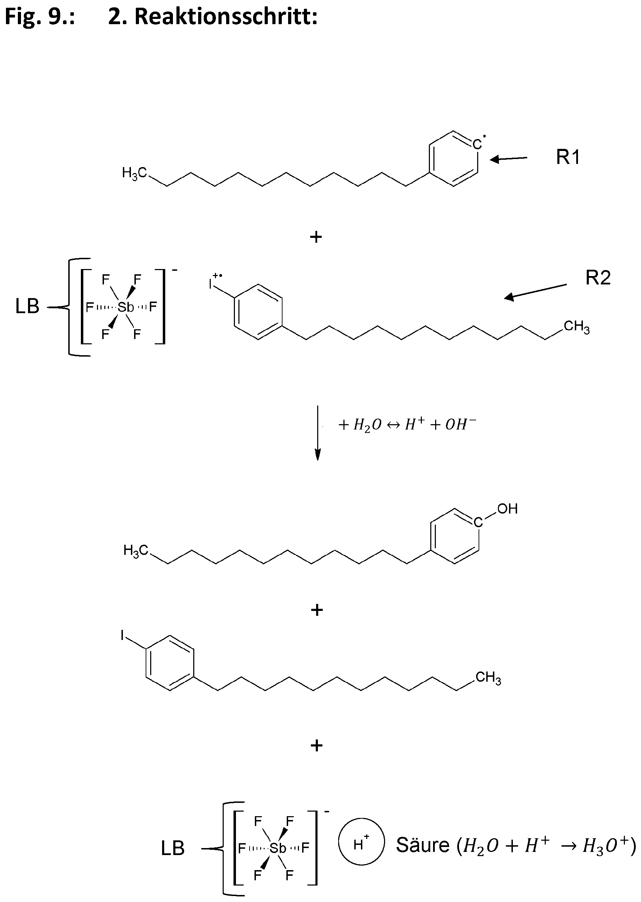

Fig. 8 und 9 zeigen dabei die chemischen Gleichungen der Reaktionsschritte, die bei der Aktivierung des im erfindungsgemäßen Verfahren eingesetzten Katalysators K ablaufen. In dem in Fig. 8 dargestellten ersten Reaktionsschritt erfolgt dabei unter dem Einfluss der Aktivierungsenergie, insbesondere von Wärme, eine Aufspaltung des Katalysatorsalzes - exemplarisch dargestellt ist ein Bis((C10-C14)-alkylphenyl)-iodonium-hexafluoro-antimonat als katalysierendes Lewis-Säure-Base-Addukt - in zwei freie Radikale R1, R2. Das erste Radikal R1 besteht aus der einen Alkylphenylkette und das zweite Radikal R2 besteht aus der anderen Alkylphenylkette einschließlich des Iods als Kation und aus dem Hexafluoroantimonat als Anion. Im zweiten Reaktionsschritt (Fig. 9) tritt ein Wassermolekül hinzu, dessen OH-Gruppe sich an das erste Radikal R1 anlagert, wobei ein Elektron an das Iod in der Alkylphenylkette des zweiten Radikals R2 wandert, so dass dieses ladungsneutral wird. Der Hexafluoroantimonat-Komplex bildet zusammen mit dem aus dem Wassermolekül stammenden Wasserstoffion H⁺ unter Absenkung des pH-Wertes die Supersäure Hexafluoroantimonsäure. Hierbei können sich mit weiterem Wasser Hydronium-Ionen H₃O⁺ bilden.

Im Rahmen der Erfindung werden also Schutzgruppen, die bekanntermaßen ausschließlich als photolabil angesehen werden, auch oder bevorzugt ausschließlich, als thermisch labile Schutzgruppen verwendet. Im Beispiel des Deuteron UV 1242 und des Deuteron UV 1240 sind dies das komplette Bisdodecylphenyl-iodonium-Ion bzw. - im Beispiel des Deuteron UV 1250 - das Bis((C10-C14)-alkylphenyl)iodonuim-Ion, da diese Gruppen vor ihrer thermischen Abspaltung die Hexafluorantimonsäure zunächst vor einer Freisetzung schützen.

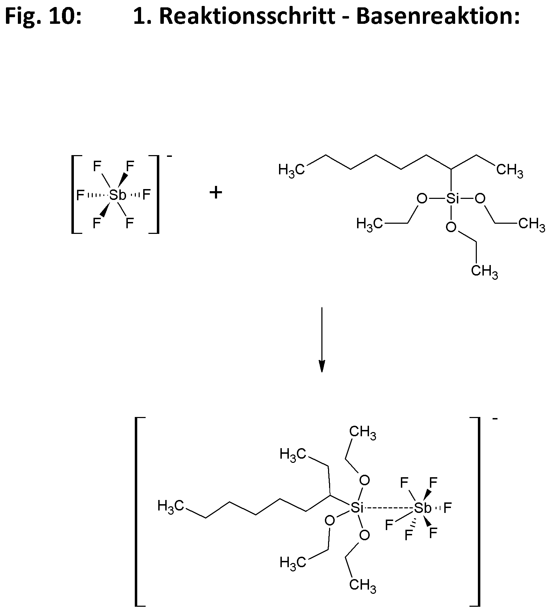

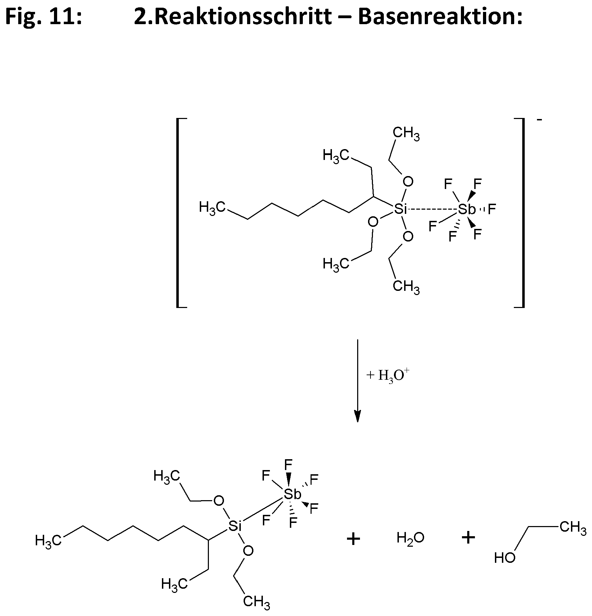

Wie aus den in Fig. 10 bis 13 dargestellten chemischen Gleichungen der Basenreaktion hervorgeht, welche vier Reaktionsschritte der hydrolytischen Zersetzung eines alkylierten silanhaltigen Ausgangsstoffes zeigen - dargestellt ist wie in Fig. 5 eine trifunktionelle ethoxylierte silanhaltige Verbindung, die bereits (nicht dargestellt) als kettenförmiges Polymer vorliegen kann - werden im Weiteren die aus der Katalysator-Dekompostion stammenden Reaktionsprodukte - also sowohl der Säurerest der Hexafluoroantimonsäure (im ersten Reaktionsschritt der Hydrolyse, Fig. 10) als auch das Hydronium-Ion (im zweiten Reaktionsschritt der Hydrolyse, Fig. 11) chemisch aktiv. Im Gegensatz zur kationischen Polymerisation dient der Säurerest der Hexafluoroantimonsäure im ersten Reaktionsschritt der Hydrolyse zwar zur Ausbildung eines Kations, aber nicht zur Ausbildung eines Carbokations, sondern er lagert sich an das Siliciumatom der Silyl-Gruppe an. Im zweiten Reaktionsschritt der Hydrolyse wird unter Abspaltung einer Ethoxy-Gruppe und Bildung von Ethanol das gebildete Kation protoniert. Auch in Fig. 5 sind EthoxyGruppen ("OEt") dargestellt, jedoch ist diese Reaktion auch für andere AlkoxyGruppen, wie Methoxy-Gruppen, charakteristisch, wobei der erfindungsgemäß eingesetzte Katalysator K aber gerade vorzugsweise bei den Ethoxy-Gruppen seine besondere Effizienz zeigt.

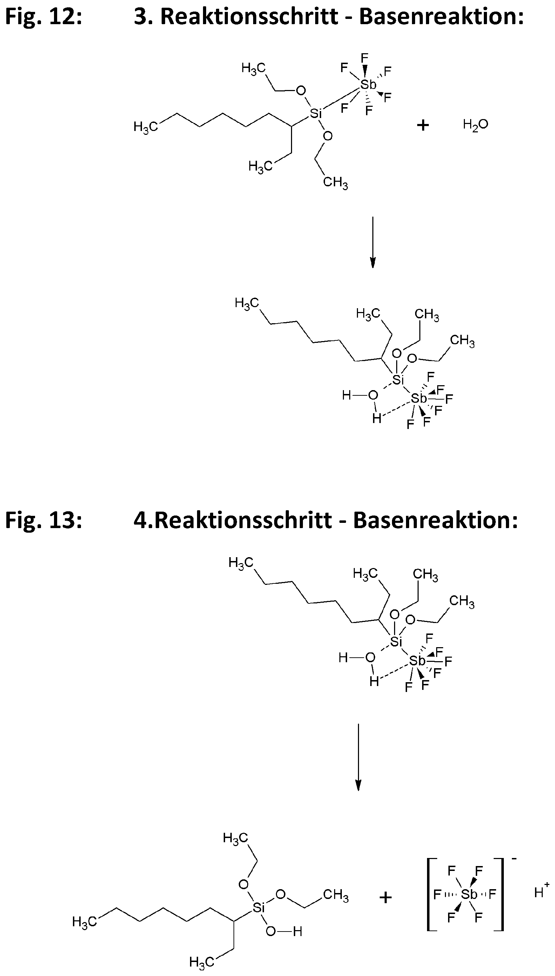

Im dritten Reaktionsschritt (Fig. 12) kommt es durch sekundäre Bindungskräfte zur Anlagerung von Wasser an das organische Molekül, wobei das so entstandene instabile Zwischenprodukt dann im vierten Reaktionsschritt (Fig. 13) zerfällt. Es entsteht wiederum die aus dem Hexafluoroantimonat-Komplex und dem Wasserstoffion H⁺ bestehende Hexafluoroantimonsäure (vergleiche Fig. 9), die zur weiteren Katalyse zur Verfügung steht, sowie auch ein hydroxiliertes organisches Molekül, welches anstelle einer Ethoxy-Gruppe nun eine Hydroxy-Gruppe am Siliciumatom trägt. Dadurch wird nachfolgend eine netzbildende Polykondensation ermöglicht, wie sie in ähnlicher Form links in Fig. 5 (Pfeil RS2) dargestellt ist.

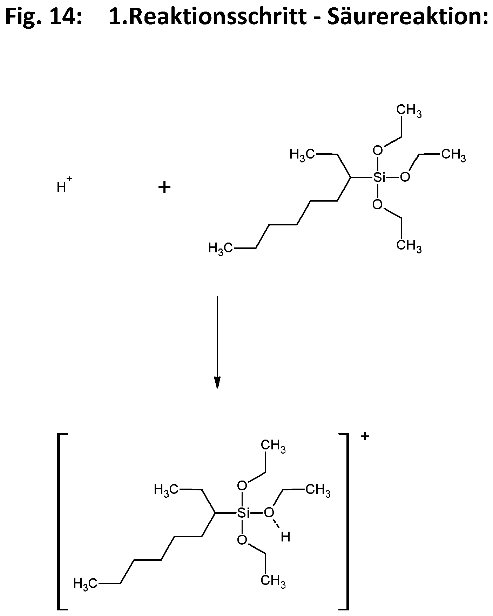

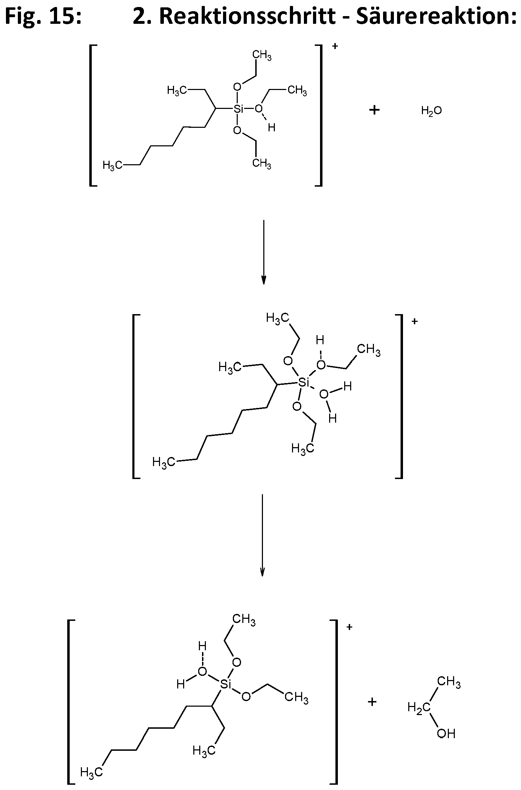

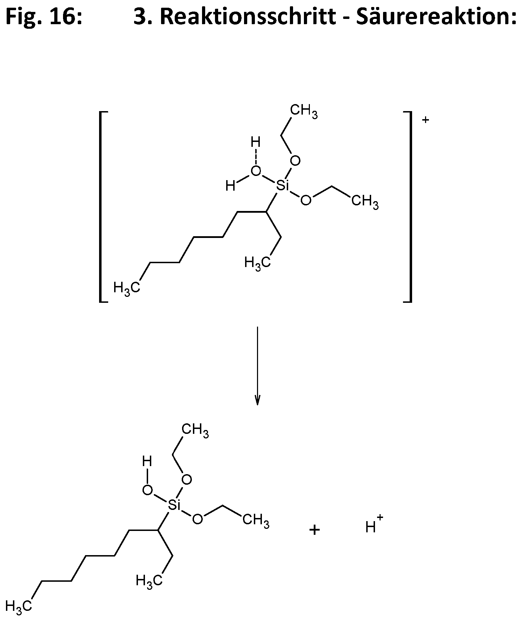

Wie aus den in Fig. 14 bis 16 dargestellten chemischen Gleichungen hervorgeht, kann neben der vorstehend exemplarisch beschriebenen Basenreaktion auch eine Säurereaktion auftreten, deren drei charakteristische Reaktionsschritte in der Zeichnung ausgehend von derselben trifunktionellen ethoxylierten silanhaltigen Ausgangsverbindung wie gemäß Fig. 10 bis 13 dargestellt sind. Durch die Zersetzung des alkylierten silanhaltigen Ausgangsstoffes entsteht - wie Fig. 16 zeigt - auch das gleiche Endprodukt wie gemäß Fig. 13. Die chemischen Gleichungen sind selbsterklärend. Wie gemäß Fig. 11 entsteht im zweiten Reaktionsschritt als Nebenprodukt ebenfalls Ethanol.

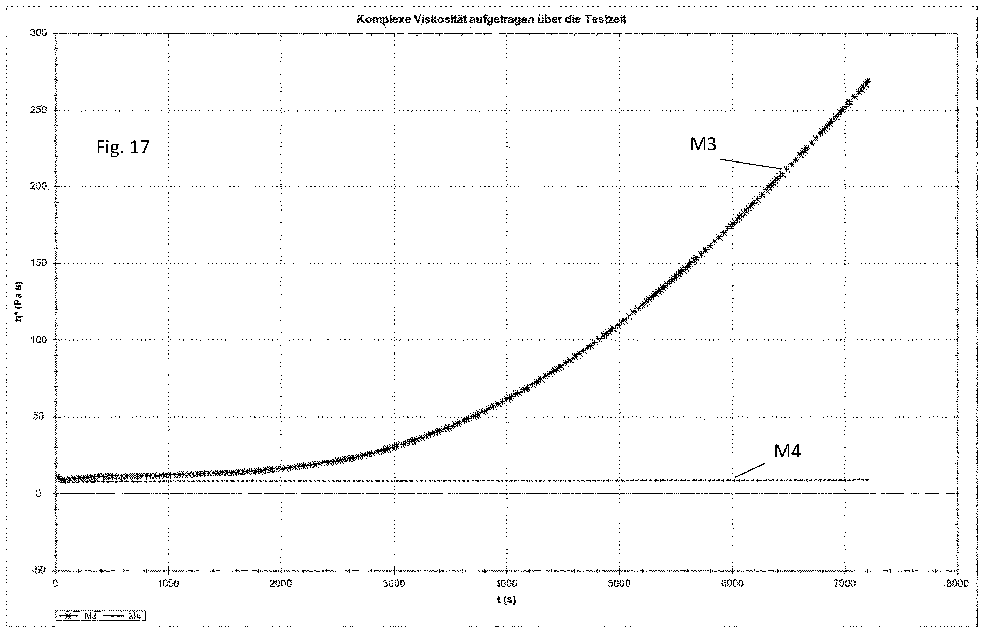

In einer weiteren, nachstehend aufgeführten Ausführungsform der Erfindung wird exemplarisch eine erfindungsgemäß bevorzugte Haftklebstoff-Rezeptur (Mischung 4, Bezugszeichen M4 in Fig. 17) vorgestellt, die sich insbesondere durch das Polymer von der Mischung M2 und durch die die Natur des Katalysators von den bekannten Rezepturen unterscheidet. Als derartige bekannte Vergleichsrezeptur wurde die Mischung 3 (Bezugszeichen M3 in Fig. 17) gegenübergestellt, wobei als Ausgangsstoffe die in der nachstehenden Tabelle 4 genannten Ausgangsstoffe zum Einsatz kamen.

**Tabelle 4: Weitere Haftklebstoff-Rezepturen (Angaben in Ma.-%)**

| Rezepturen (Angaben in Masseprozent) | | | |
|---|---|---|---|
| Funktion | Ausgangsstoff | M3 Vergleich | M4 Erfindung |
| Polymer | Kaneka SAX 510 | 45,91 | 45,91 |
| Flüssigadditiv | Dynasylan VTMO | 0,75 | 0,00 |
| Harz | Dertophene T115 | 52,59 | 52,59 |
| Katalysatoren | TIB-KAT^{®} 216 | 0,75 | 0,00 |
| | Deuteron UV 1242 | 0,00 | 1,50 |
| Summe | | 100,00 | 100,00 |

Bei Kaneka SAX 510 (Lieferant: Kaneka Corp.) handelt es sich um ein endständig trimethoxysiliertes MS-Polymer (TMS-MS), das in den Mischungen M3 und M4 als einziges Präpolymer eingesetzt wurde. Kaneka SAX 510 ist ein unverzweigtes Präpolymer, bei dem die drei alkoxyfunktionellen Silangruppen, insbesondere - im Gegensatz zu Tegopac Seal 100 in den Mischungen M1, M2 - Methoxygruppen, terminal an ein Polyethergerüst des Polymers angebunden sind.

In beiden Rezepturen M3, M4 wurde als Harz Dertophene T 115 der Firma DRT eingesetzt, bei dem es sich - wie bei Dertophen H 150 - um ein Terpen-Phenol-Harz mit einem Erweichungspunkt von 120 °C (bestimmt nach dem Ring-Ball-Verfahren) handelt. Dertophene T 115 unterscheidet sich von Dertophen H 150 durch eine niedrigere Hydroxylzahl, auf deren Bedeutung und Bestimmung bereits vorstehend eingegangen wurde. Bei Dertophene T 115 liegt die Hydroxylzahl bei 40 -60, während der Wert für Dertophen H 150 bei 145 liegt.

Auch hier werden im Sinne einer vertieften Verständlichkeit in Tabelle 4a dieselben Rezepturen nochmals in phr (parts per hundred rubber) angegeben, wobei die normierenden "100 Teile Rubber" durch die Menge des Präpolymers (Kaneka SAX 510) gebildet werden.

**Tabelle 4a: Weitere Haftklebstoff-Rezepturen (Angaben in phr)**

| Rezepturen (Angaben in phr) | | | |
|---|---|---|---|
| Funktion | Ausgangsstoff | M3 Vergleich | M4 Erfindung |
| Polymer | Kaneka SAX 510 | 100,0 | 100,0 |
| Flüssigadditiv | Dynasylan VTMO | 1,63 | 0,00 |
| Harz | Dertophene T 115 | 114,6 | 114,6 |
| Katalysatoren | TIB-KAT^{®} 216 | 1,63 | 0,00 |
| | Deuteron UV 1242 | 0,00 | 3,27 |
| Summe | | 217,8 | 217,8 |

Beim Einsatz eines methoxylierten Polymers in der Rezeptur - ohne ein weiteres Polymer als Mischungsbestandteil (Anteil des "ersten Polymers" ist gleich 100 Prozent, Anteil des "zweiten Polymers" ist gleich Null) - kann dieses einzige Polymer bevorzugt eine Kettenlänge im Bereich von mehr als 5 K, vorzugsweise im Bereich von 10 K bis 36 K, im Mittel von 25 K aufweisen, wobei 1 K einer Kettenlänge mit einer molaren Masse von 1000 g/mol entspricht.

Bei einem Gesamtanteil von silanmodifizierten methoxysilierten Präpolymeren im Bereich von 50 Ma.-%, bis zu 100 Ma.-% im Gemisch der kettenförmigen silanmodifizierten alkoxysilierten Präpolymere kann mit Vorteil vorgesehen sein, dass eine thermische Vernetzung durch UV-Bestrahlung unterstützt wird.

Fig. 17 zeigt den Vergleich des Zeitgangs der komplexen Viskosität η*, die aufgrund der - unter den gleichen Bedingungen wie bei den in Fig. 7 dargestellten Messungen thermisch angeregten - Vernetzung stetig zunahm. In der erfindungsgemäßen Mischung M4 (untere Kurve in Fig. 17) erfolgte der Anstieg jedoch in sehr viel geringem Maß als bei der Vergleichsmischung M3 (obere Kurve in Fig. 17). Dies weist darauf hin, dass bei der gewählten Untersuchungstemperatur im Katalysator noch eine Hemmung in Bezug auf eine Initiierung der Reaktionen zur Hydrolyse der Methoxygruppen und anschließenden Kondensation, insbesondere in Bezug auf das Einsetzen der jeweils ersten Reaktionsschritte gemäß Fig. 10 und 14, vorlag. Nach etwa einer halben Stunde (1500 s) setzte eine merkliche Divergenz des Viskositätsanstiegs der beiden Mischungen M3, M4 ein, die nach zwei Stunden (7200 s) immer noch nicht abgeschlossen war. Die Vergleichsmischung M3 wies zu diesem Zeitpunkt eine komplexe Viskosität η* von über 250 mPas auf, während diese bei der erfindungsgemäßen Mischung M4 immer noch bei etwa 20 mPas lag. Es hat sich gezeigt, dass einerseits durch eine höhere Temperatur und/oder eine zusätzliche Unterstützung der Vernetzung durch UV-Bestrahlung die erfindungsgemäße Kurve M4 bedarfsweise angehoben werden kann, dass aber andererseits eine langsame Reaktionsgeschwindigkeit, insbesondere eine verzögerte Hydrolyse- und/oder Vernetzungsgeschwindigkeit, auf die der vergleichsweise geringe Viskositätsanstieg der Mischung M4 hinweist, insbesondere in den Fällen vorteilhaft ist, in denen eine Verkrustung im Beschichtungskopf und/oder eine Ausbildung von Inhomogenitäten in der Klebeschicht wirksam verhindert werden sollen. Hierbei ist auch zu beachten, dass der jeweils langsamste Reaktionsschritt den größten Einfluss auf die Geschwindigkeit des Ablaufs der Gesamtreaktion hat. Die erfindungsgemäße vorteilhafte Möglichkeit der Steuerung der Reaktionsgeschwindigkeit besteht also auch - neben der bereits erwähnten Katalysatorauswahl an sich - in der Abstimmung der zu vernetzenden Mischungsreaktanden auf einen erfindungsgemäß eingesetzten Katalysator unter Ausnutzung seiner selektiven Wirksamkeit gegenüber verschiedenartigen alkoxylierten Reaktionspartnern.

Die Erfindung ist nicht auf die in den Ansprüchen 1, 16 und 17 definierten Merkmalskombinationen beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal der unabhängigen Ansprüche weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen. Die Zeilen, welche in den Tabellen 1/1a sowie 4/4a jeweils einen bestimmten Rezepturbestandteil betreffen, sind als jeweils unabhängig von den in einer gleichen Spalte für die Rezeptur befindlichen weiteren Rezepturbestandteilen anzusehen.

Es versteht sich, dass - im Gegensatz zu den Angaben in "parts per hundred rubber" (phr) - bei einer in Masseprozent (Ma.-%) angegebenen Rezeptur die Summe aller Rezepturbestandteile immer 100 % beträgt.

## Patentansprüche

1. Verfahren zur Herstellung eines druckempfindlichen selbstklebenden Haftklebstoffes auf der Basis eines alkoxylierten, insbesondere ethoxylierten, silanhaltigen Polymers, dem mindestens ein mit dem alkoxylierten, insbesondere ethoxylierten, silanhaltigen Polymer kompatibles klebrig machendes Harz und mindestens ein Katalysator (K) zugemischt wird, **dadurch gekennzeichnet, dass** das alkoxylierte, insbesondere ethoxylierte, silanhaltige Polymer unter Einsatz eines Katalysators (K) vernetzt wird, der ein Lewis-Säure-Base-Addukt umfasst, wobei die Lewis-Säure (LS) ein zumindest im Temperaturbereich unter 60 °C in wasserfreiem Medium reaktionsgehemmtes Kation und die Lewis-Base (LB) ein Anion einer sehr starken Säure ist.

2. Verfahren nach Anspruch 1,
**dadurch gekennzeichnet, dass** das Lewis-Säure-Base-Addukt eine im Temperaturbereich unter 80 °C, insbesondere bis zu 110 °C, in wasserfreiem Medium reaktionsgehemmte Verbindung ist, wobei die Vernetzung bevorzugt ausschließlich thermisch, insbesondere bei einer Temperatur im Bereich von 85 °C bis 180 °C, vorzugsweise im Bereich von 90 °C bis 120 °C, aktiviert wird, wobei insbesondere in einen Ofen, in dem die Vernetzung stattfindet - abgesehen von gegebenenfalls vorher in die Mischung eingebrachtem und von bei der Reaktion entstehendem Wasser - keine Wasserzufuhr erfolgt.

3. Verfahren nach Anspruch 1 oder 2,
**dadurch gekennzeichnet, dass** die Lewis-Säure (LS) ein sterisch gehindertes Kation ist und/oder mindestens eine Schutzgruppe enthält.

4. Verfahren nach einem der Ansprüche 1 bis 3,
**dadurch gekennzeichnet, dass** das Kation ein organylgruppenhaltiges (AG) Halogen-Onium-Kation ist, welches bevorzugt ein oder mehrere, insbesondere zwei oder drei, Arylgruppen als Organylgruppen und/oder bevorzugt Jod als Halogen enthält, wobei das Lewis-Säure-Base-Addukt besonders bevorzugt ein Aryliodoniumsalz enthält, wobei eine Aktivierungsenergie und eine Reaktionskinetik der Vernetzung insbesondere durch die Kettenlänge und die chemische Natur der Organyl-Gruppe(n) (AG), vorzugsweise durch eine geeignete Kombination von aromatischen und aliphatischen Gruppenbestandteilen, in dem die Lewis-Säure (LS) bildenden, organylgruppenhaltigen (AG) Halogen-Onium-Kation, eingestellt wird.

5. Verfahren nach einem der Ansprüche 1 bis 4,
**dadurch gekennzeichnet, dass** die sehr starke Säure zumindest eine Brønstedt-Säure mit einem pKₛ-Wert von ≤ -3,0 ist, wobei die sich daraus ableitende Lewis-Base (LB) insbesondere ein Anion einer Supersäure ist, wobei die Supersäure entsprechend der Hammettschen Aciditätsfunktion bevorzugt einen H₀-Wert im Bereich von -14 bis -30, besonders bevorzugt im Bereich von -20 bis -27, aufweist.

6. Verfahren nach einem der Ansprüche 1 bis 5,
**dadurch gekennzeichnet, dass** das Lewis-Säure-Base-Addukt ein Di- oder Triphenyliodonium-Salz, wie insbesondere Bis(dodecylphenyl)-iodonium- oder Bis((C10-C14)-alkylphenyl)-iodonium-hexafluoro-antimonat oder -triflat, enthält.

7. Verfahren nach einem der Ansprüche 1 bis 6,
**dadurch gekennzeichnet, dass** das Lewis-Säure-Base-Addukt in einem wasserfreien Lösungsmittel (L) gelöst ist, wobei das Lösungsmittel (L) insbesondere ein polares organisches Lösungsmittel (L), wie ein Glycidether mit vorzugsweise 8 bis 18, insbesondere 12 bis 14, Kohlenstoffatomen in seinem Molekül oder wie vorzugsweise Propylencarbonat, ist.

8. Verfahren nach einem der Ansprüche 1 bis 7,
**dadurch gekennzeichnet, dass** die Mischung mit dem alkoxylierten, insbesondere ethoxylierten, silanhaltigen Polymer ein Ein-Komponenten-System ist, wobei der Haftklebstoff bevorzugt aus einem Gemisch von kettenförmigen silanmodifizierten alkoxysilierten Präpolymeren hergestellt wird und das Gemisch mindestens ein erstes, silanmodifiziertes, an der Kette vorzugsweise seitenständig alkoxyliertes, insbesondere ethoxysiliertes, Präpolymer und/oder mindestens ein zweites silanmodifiziertes, an der Kette endständig und/oder seitenständig ethoxysiliertes und/oder methoxysiliertes Präpolymer enthält, wobei das erste Präpolymer und das zweite Präpolymer unter Abspaltung von Alkohol, wie Methanol und/oder Ethanol, miteinander vernetzt werden.

9. Verfahren nach Anspruch 8,
**dadurch gekennzeichnet, dass** das erste, silanmodifizierte an der Kette vorzugsweise seitenständig alkoxylierte, insbesondere ethoxysilierte, Präpolymer ein längerkettiges Präpolymer ist als das zweite kürzerkettige, an der Kette endständig und/oder seitenständig ethoxysilierte und/oder methoxysilierte Präpolymer und/oder dass der Polymerisationsgrad des zweiten Präpolymers kleiner ist als der Polymerisationsgrad des ersten Präpolymers, wobei die Polymerisationsgrade um mindestens zwei Zehnerpotenzen differieren, wobei vorzugsweise ein Anteil von längerkettigen, endständig silanmodifizierten, alkoxysilierten Präpolymen kleiner ist als 15 Ma.-% der Summe der Masse von Präpolymeren und dem Katalysator sowie gegebenenfalls vorhandenem Harz und weiteren Inhaltsstoffen.

10. Verfahren nach einem der Ansprüche 8 oder 9,
**dadurch gekennzeichnet, dass** das erste Präpolymer oder das zweite Präpolymer oder die Präpolymere der Mischung Polyurethane und/oder Polyether mit ein, zwei oder drei Gruppen vom Mono-, Di- oder Trialkoxysilan-Typ sind, wobei vorzugsweise das erste Präpolymer oder das zweite Präpolymer oder die Präpolymere der Mischung als funktionelle Gruppen Amino-, Glycidoxy-, Schwefel- und Methacryloxy-Gruppen im Molekül enthalten, die in γ-Stellung über eine Propylenbrücke oder vorzugsweise in α-Stellung über eine Methylengruppe an mindestens ein Silicium-Atom des ethoxysilierten und/oder methoxysilierten Präpolymers gebunden sind.

11. Verfahren nach einem der Ansprüche 8 bis 10,
**dadurch gekennzeichnet, dass** ein Gesamtanteil von silanmodifizierten methoxysilierten Präpolymeren im Gemisch der kettenförmigen silanmodifizierten alkoxysilierten Präpolymere bis zu 100 Ma.-%, vorzugsweise aber höchstens 50 Ma.-%, beträgt.

12. Verfahren nach einem der Ansprüche 1 bis 11,
**dadurch gekennzeichnet, dass** einem/dem ethoxylierten silanhaltigen Polymer, insbesondere einem/dem das ethoxylierte silanhaltige Polymer enthaltenden Gemisch von kettenförmigen, silanmodifizierten alkoxysilierten Präpolymeren, klebrigmachende Harze zugefügt werden, insbesondere in einem Verhältnis von 1 : 4 bis 4 : 1, vorzugsweise in einem Verhältnis 1 : 1, wobei als klebrig machende Harze vorzugsweise phenolmodifizierte Terpenharze, Kohlenwasserstoffharze, Rosinesterharze, Acrylharze und deren Mischungen eingesetzt werden.

13. Verfahren nach einem der vorhergehenden Ansprüche,
**dadurch gekennzeichnet, dass** bei einem Gesamtanteil von silanmodifizierten methoxysilierten Präpolymeren im Gemisch der kettenförmigen silanmodifizierten alkoxysilierten Präpolymere im Bereich von 50 Ma.-%, bis zu 100 Ma.-% eine thermische Vernetzung durch UV-Bestrahlung unterstützt wird.

14. Verfahren nach einem der vorhergehenden Ansprüche,
**dadurch gekennzeichnet, dass** bei ausschließlichem Vorhandensein eines methoxylierten Polymers im Gemisch der kettenförmigen silanmodifizierten alkoxysilierten Präpolymere in der Rezeptur dieses einzige Polymer eine Kettenlänge im Bereich von mehr als 5 K, vorzugsweise im Bereich von 10 K bis 36 K, im Mittel von 25 K aufweist.

15. Verfahren nach einem der Ansprüche 1 bis 14,
**dadurch gekennzeichnet, dass** ein Masseanteil des Katalysators (K) - bezogen auf die Summe der Massen des alkoxylierten, insbesondere ethoxylierten, silanhaltigen Polymers oder der Mischung aus Präpolymeren und der Massen des Harzes, des Katalysators (K) und gegebenenfalls vorhandener weiterer Inhaltsstoffe im Bereich von 0,2 % bis 10,0 %, vorzugsweise im Bereich von 0,6 % bis 5,0 % liegt.

16. Haftklebstoff, hergestellt nach einem Verfahren nach einem der Ansprüche 1 bis 15.

17. Verwendung eines Haftklebstoffs nach Anspruch 16 zur Herstellung eines Haftklebeartikels, wie eines Klebebandes oder eines Etiketts, umfassend einen Träger, auf den zumindest einseitig ein unvernetzter Haftklebstoff als eine Mischung in Form einer Klebstoffmasse aufgetragen und anschließend zum Haftklebstoff, vorzugsweise thermisch, vernetzt wird.

## Claims

1. Method for manufacturing a pressure-sensitive self-adhering adhesive based on an alkoxylated, in particular ethoxylated, silane-containing polymer, mixed with at least one tackifying resin compatible with the alkoxylated, in particular ethoxylated, silane-containing polymer and at least one catalyst (K),
**characterized in that** the alkoxylated, in particular ethoxylated, silane-containing polymer is crosslinked using a catalyst (K), which comprises a Lewis acid-base adduct, wherein the Lewis acid (LS) is a reaction-inhibiting cation at least in the temperature range below 60 °C in anhydrous medium, and the Lewis base (LB) is an anion of a very strong acid.

2. Method according to claim 1,
**characterized in that** the Lewis acid-base adduct is a reaction-inhibiting compound in the temperature range below 80 °C, in particular up to 110 °C, in anhydrous medium, wherein the crosslinking is activated preferably exclusively thermally, in particular at a temperature in the range from 85 °C to 180 °C, preferably in the range from 90 °C to 120 °C, wherein in particular in an oven, wherein the crosslinking takes place with no addition of water - except for water possibly previously introduced into the mixture and arising from the reaction.

3. Method according to claim 1 or 2,
**characterized in that** the Lewis acid (LS) is a sterically inhibited cation and/or contains at least one protective group.

4. Method according to one of claims 1 to 3,
**characterized in that** the cation is an organyl-group-containing (AG) halogen onium cation, which preferably contains one or more, in particular two or three, aryl groups as organyl groups and/or preferably contains iodine as halogen, wherein the Lewis acid-base adduct particularly preferably contains an aryliodonium salt, wherein an activation energy and a reaction kinetics of the crosslinking is adjusted in particular by the chain length and the chemical nature of the organyl group(s) (AG), preferably by a suitable combination of aromatic and aliphatic group components by the Lewis-acid-(LS)-forming, organyl-group-containing (AG) halogen onium cation.

5. Method according to one of claims 1 to 4,
**characterized in that** the very strong acid is at least one Brønstedt acid having a pKₐ value of ≤ -3.0, wherein the Lewis base (LB) is in particular an anion of a superacid, wherein the superacid preferably has an H₀ value in accordance with the Hammett acidity function in the range from -14 to -30, particularly preferably in the range from -20 to -27.

6. Method according to one of claims 1 to 5,
**characterized in that** the Lewis acid-base adduct contains a di- or triphenyliodonium salt, such as in particular Bis(dodecylphenyl)-iodonium- or Bis((C10-C14)-alkylphenyl)-iodonium- hexafluoro-antimonate or -triflate.

7. Method according to one of claims 1 to 6,
**characterized in that** the Lewis acid-base adduct is dissolved in an anhydrous solvent (L), wherein the solvent (L) is in particular a polar organic solvent (L), such as a glycid ether having preferably 8 to 18, in particular 12 to 14, carbon atoms in its molecule or as preferably propylene carbonate.

8. Method according to one of claims 1 to 7,
**characterized in that** the mixture with the alkoxylated, in particular ethoxylated, silane-containing polymer is a one-component system, wherein the adhesive is preferably manufactured from a mixture of chain-shaped silane-modified alkoxy ensilated prepolymers, and the mixture contains at least one first, silane-modified alkoxylated, in particular ethoxylated, prepolymer preferably laterally on the chain, and/or at least one second silane-modified, ethoxylated and/or methoxylated prepolymer terminal or lateral on the chain, wherein the first prepolymer and the second prepolymer are crosslinked with each other under splitting of alcohol, such as methanol or ethanol.

9. Method according to claim 8,
**characterized in that** the first, silane-modified, alkoxylated, in particular ethoxylated prepolymer preferably laterally on the chain, is a longer prepolymer than the second shorter-chain, ethoxylated and/or methoxylated prepolymer terminally and/or laterally on the chain, and/or that the degree of polymerization of the second prepolymer is less than the degree of polymerization of the first prepolymer, wherein the degrees of polymerization differ by at least two powers of ten, wherein preferably a component of longerchain, terminal, silane-modified, alkoxylated prepolymers is less than 15 ma.-% of the total of the masses of prepolymers and the catalysts as well as possibly present resin and further ingredients.

10. Method according to one of claims 8 or 9,
**characterized in that** the first prepolymer or the second prepolymer or the prepolymers of the mixture are polyurethanes and or polyethers having one, two, or three groups of mono-, di-, or trialkoxysilane-type, wherein preferably the first prepolymer or the second prepolymer or the prepolymers of the mixture contain as functional groups amino-, glycidoxy-, sulphuric-, and/or methacryloxy-groups in the molecule that are bound in the γ-position via a propylene bridge or preferably in the α-position via a methylene group to at least one silicon atom of the ethoxy ensilated and/or methoxy ensilated prepolymer.

11. Method according to one of claims 8 to 10,
**characterized in that** a total proportion of silane-modified methoxylated prepolymers in the mixture of the chain-shaped silane-modified alkoxylated prepolymers is up to 100 ma.-%, but preferably at most 50 ma.-%.

12. Method according to one of claims 1 to 11,
**characterized in that** tackifying resin is added to a/the ethoxylated silane-containing polymer, in particular a/the mixture of chain-shaped, silane-modified alkoxy ensilated prepolymers containing the ethoxylated silane-containing polymer, in particular in a ratio of 1: 4 to 4: 1, preferably in a ratio 1: 1, wherein phenol-modified terpene resins, hydrocarbon resins, rosin ester resins, acrylic resins, and their mixtures are preferably used as tackifying resins.

13. Method according to one of the preceding claims,
**characterized in that** with a total proportion of silane-modified methoxylated prepolymers in the mixture of the chain-shaped silane-modified alkoxylated prepolymers in the range of 50 ma.-%, up to 100 ma.-%, a thermal crosslinking is supported by UV irradiation.

14. Method according to one of the preceding claims,
**characterized in that** in the case of exclusive presence of a methoxylated polymer in the mixture of the chain-shaped silane-modified alkoxy ensilated prepolymers in the formula, this single polymer has a chain length in the range of more than 5 K, preferably in the range of 10 K to 36 K, on average 25 K.

15. Method according to one of claims 1 to 14,
**characterized in that** a mass proportion of the catalyst (K) - based on the sum of the masses of the alkoxylated, in particular ethoxylated, silane-containing polymer, or the mixture of prepolymers and the masses of the resin, of the catalyst (K), and optionally present further ingredients is in the range of 0.2% to 10.0%, preferably in the range of 0.6% to 5.0%.

16. Adhesive, manufactured according to a method according to one of claims 1 to 15.

17. Use of an adhesive according to claim 16 for manufacturing an adhesive product, such as an adhesive tape or a label, comprising a carrier on which an uncrosslinked adhesive is applied at least on one side as a mixture in the form of an adhesive mass and is subsequently crosslinked to an adhesive, preferably thermally.

## Revendications

1. Procédé de fabrication d'un adhésif sensible à la pression auto-adhésif à base d'un polymère alcoxylé, en particulier éthoxylé, contenant du silane, auquel sont ajoutés au moins une résine tackifiante compatible avec le polymère alcoxylé, en particulier éthoxylé, contenant du silane et au moins un catalyseur (K),
**caractérisé en ce que** le polymère alcoxylé, en particulier éthoxylé, contenant du silane est réticulé en utilisant un catalyseur (K) qui comprend un adduit acide de Lewis-base de Lewis, l'acide de Lewis (LS) étant un cation à réaction inhibée au moins dans la plage de température inférieure à 60 °C en milieu anhydre et la base de Lewis (LB) étant un anion d'un acide très fort.

2. Procédé selon la revendication 1,
**caractérisé en ce que** l'adduit acide de Lewis-base de Lewis est un composé à réaction inhibée dans la plage de température inférieure à 80 °C, en particulier jusqu'à 110 °C, en milieu anhydre, la réticulation étant de préférence activée exclusivement thermiquement, en particulier à une température dans la plage de 85 °C à 180 °C, de préférence dans la plage de 90 °C à 120 °C, aucun apport d'eau n'étant effectué en particulier dans un four dans lequel la réticulation a lieu - à l'exception de l'eau éventuellement introduite préalablement dans le mélange et de l'eau produite lors de la réaction.

3. Procédé selon la revendication 1 ou 2,
**caractérisé en ce que** l'acide de Lewis (LS) est un cation stériquement encombré et/ou contient au moins un groupe protecteur.

4. Procédé selon l'une des revendications 1 à 3,
**caractérisé en ce que** le cation est un cation halogéno-onium contenant un groupe organyle (AG), qui contient de préférence un ou plusieurs, en particulier deux ou trois, groupes aryle comme groupes organyle et/ou de préférence de l'iode comme halogène, l'adduit acide de Lewis-base de Lewis contenant de manière particulièrement préférée un sel d'aryliodonium, une énergie d'activation et une cinétique de réaction de la réticulation étant ajustées en particulier par la longueur de chaîne et la nature chimique du ou des groupes organyle (AG), de préférence par une combinaison appropriée de constituants de groupes aromatiques et aliphatiques, dans le cation halogéno-onium contenant un groupe organyle (AG) formant l'acide de Lewis (LS).

5. Procédé selon l'une des revendications 1 à 4,
**caractérisé en ce que** l'acide très fort est au moins un acide de Bronsted ayant une valeur de pKₐ ≤ -3,0, la base de Lewis (LB) qui en dérive étant en particulier un anion d'un superacide, le superacide présentant de préférence, selon la fonction d'acidité de Hammett, une valeur Ho dans la plage de -14 à -30, de manière particulièrement préférée dans la plage de -20 à -27.

6. Procédé selon l'une des revendications 1 à 5,
**caractérisé en ce que** l'adduit acide de Lewis-base de Lewis contient un sel de di- ou triphényliodonium, tel qu'en particulier l'hexafluoroantimoniate ou le triflate de bis(dodécylphényl)-iodonium ou de bis((C10-C14)-alkylphényl)-iodonium.

7. Procédé selon l'une des revendications 1 à 6,
**caractérisé en ce que** l'adduit acide de Lewis-base de Lewis est dissous dans un solvant anhydre (L), le solvant (L) étant en particulier un solvant organique polaire (L), tel qu'un éther de glycidyle ayant de préférence 8 à 18, en particulier 12 à 14, atomes de carbone dans sa molécule ou tel que de préférence le carbonate de propylène.

8. Procédé selon l'une des revendications 1 à 7,
**caractérisé en ce que** le mélange avec le polymère alcoxylé, en particulier éthoxylé, contenant du silane est un système monocomposant, l'adhésif sensible à la pression étant de préférence fabriqué à partir d'un mélange de prépolymères alcoxylés modifiés par silane en forme de chaîne et le mélange contenant au moins un premier prépolymère modifié par silane, alcoxylé de préférence latéralement sur la chaîne, en particulier éthoxysilé, et/ou au moins un deuxième prépolymère modifié par silane, éthoxysilé et/ou méthoxysilé en position terminale et/ou latérale sur la chaîne, le premier prépolymère et le deuxième prépolymère étant réticulés l'un avec l'autre avec élimination d'alcool, tel que le méthanol et/ou l'éthanol.

9. Procédé selon la revendication 8,
**caractérisé en ce que** le premier prépolymère modifié par silane, alcoxylé de préférence latéralement sur la chaîne, en particulier éthoxysilé, est un prépolymère à chaîne plus longue que le deuxième prépolymère à chaîne plus courte, éthoxysilé et/ou méthoxysilé en position terminale et/ou latérale sur la chaîne, et/ou **en ce que** le degré de polymérisation du deuxième prépolymère est inférieur au degré de polymérisation du premier prépolymère, les degrés de polymérisation différant d'au moins deux ordres de grandeur, une proportion de prépolymères à chaîne plus longue, modifiés par silane en position terminale, alcoxylés, étant de préférence inférieure à 15 % en masse de la somme de la masse des prépolymères et du catalyseur ainsi que de la résine éventuellement présente et d'autres constituants.

10. Procédé selon l'une des revendications 8 ou 9,
**caractérisé en ce que** le premier prépolymère ou le deuxième prépolymère ou les prépolymères du mélange sont des polyuréthanes et/ou des polyéthers avec un, deux ou trois groupes de type mono-, di- ou trialcoxysilane, de préférence le premier prépolymère ou le deuxième prépolymère ou les prépolymères du mélange contenant comme groupes fonctionnels des groupes amino, glycidoxy, soufre et méthacryloxy dans la molécule, qui sont liés en position γ par un pont propylène ou de préférence en position α par un groupe méthylène à au moins un atome de silicium du prépolymère éthoxysilé et/ou méthoxysilé.

11. Procédé selon l'une des revendications 8 à 10,
**caractérisé en ce qu'**une proportion totale de prépolymères méthoxysilés modifiés par silane dans le mélange des prépolymères alcoxylés modifiés par silane en forme de chaîne s'élève jusqu'à 100 % en masse, mais de préférence au maximum 50 % en masse.

12. Procédé selon l'une des revendications 1 à 11,
**caractérisé en ce que** des résines tackifiantes sont ajoutées à un/au polymère éthoxylé contenant du silane, en particulier à un/au mélange contenant le polymère éthoxylé contenant du silane de prépolymères alcoxylés modifiés par silane en forme de chaîne, en particulier dans un rapport de 1 : 4 à 4 : 1, de préférence dans un rapport de 1 : 1, des résines terpéniques modifiées au phénol, des résines hydrocarbonées, des résines d'ester de colophane, des résines acryliques et leurs mélanges étant de préférence utilisés comme résines tackifiantes.

13. Procédé selon l'une des revendications précédentes,
**caractérisé en ce que** pour une proportion totale de prépolymères méthoxysilés modifiés par silane dans le mélange des prépolymères alcoxylés modifiés par silane en forme de chaîne dans la plage de 50 % en masse jusqu'à 100 % en masse, une réticulation thermique est assistée par irradiation UV.

14. Procédé selon l'une des revendications précédentes,
**caractérisé en ce qu'**en présence exclusive d'un polymère méthoxylé dans le mélange des prépolymères alcoxylés modifiés par silane en forme de chaîne dans la formulation, ce polymère unique présente une longueur de chaîne dans la plage de plus de 5 K, de préférence dans la plage de 10 K à 36 K, en moyenne de 25 K.

15. Procédé selon l'une des revendications 1 à 14,
**caractérisé en ce qu'**une fraction massique du catalyseur (K) - rapportée à la somme des masses du polymère alcoxylé, en particulier éthoxylé, contenant du silane ou du mélange de prépolymères et des masses de la résine, du catalyseur (K) et d'autres constituants éventuellement présents - se situe dans la plage de 0,2 % à 10,0 %, de préférence dans la plage de 0,6 % à 5,0 %.

16. Adhésif sensible à la pression, fabriqué selon un procédé selon l'une des revendications 1 à 15.

17. Utilisation d'un adhésif sensible à la pression selon la revendication 16 pour la fabrication d'un article adhésif sensible à la pression, tel qu'un ruban adhésif ou une étiquette, comprenant un support sur lequel un adhésif sensible à la pression non réticulé est appliqué au moins sur une face sous forme d'un mélange sous forme de masse adhésive et est ensuite réticulé pour former l'adhésif sensible à la pression, de préférence thermiquement.
